# EUROPÄISCHE PATENTSCHRIFT

(11) **EP 3 867 203 B1**
(45) Veröffentlichungstag und Bekanntmachung des Hinweises auf die Patenterteilung: **12.04.2023**
(21) Anmeldenummer: 19778500.9
(22) Anmeldetag: 25.09.2019
(51) Int. Cl.: C03B 33/07, C03B 33/03, B65G 49/06, C03B 33/037, B32B 17/06, B32B 17/10

(54) **VERBUNDGLASSCHNEIDANLAGE UND VERFAHREN ZUM SCHNEIDEN VON VERBUNDGLASTAFELN**
LAMINATED GLASS CUTTING SYSTEM AND METHOD FOR CUTTING LAMINATED GLASS PANELS
DISPOSITIF DE DÉCOUPE DE VERRE FEUILLETÉ ET PROCÉDÉ POUR DÉCOUPER DES PANNEAUX DE VERRE FEUILLETÉ

(30) Priorität: 15.10.2018 DE 102018217660
(43) Veröffentlichungstag der Anmeldung: 25.08.2021
(73) Patentinhaber: HEGLA GmbH & Co. KG, 37688 Beverungen (DE)
(72) Erfinder: BÖHMER, Peter, 37671 Höxter (DE); REUTER, Stefan, 33014 Bad Driburg (DE); ROTERMUND, Christian, 37671 Höxter (DE); KUSSEROW, Josef, 37671 Höxter (DE); GLAHN, Michael, 33102 Paderborn (DE); WERNEKE, Mirko, 37688 Beverungen (DE); HÖTGER, Bernhard, 37697 Lauenförde (DE)
(74) Vertreter: Dr. Solf & Zapf Patent- und Rechtsanwalts PartG mbB
(86) Internationale Anmeldenummer: PCT/EP2019/075951
(87) Internationale Veröffentlichungsnummer: WO 2020/078681

(56) Entgegenhaltungen:
- EP-A1- 3 184 493
- JP-A- 2004 066 636
- US-A1- 2007 296 134

## Beschreibung

Die vorliegende Erfindung betrifft eine Verbundglasschneidanlage zum Aufteilen von Verbundglastafeln, insbesondere Verbundsicherheitsglastafeln, in einzelne Verbundglasscheiben, insbesondere Verbundsicherheitsglasscheiben, sowie ein Verfahren zum Schneiden von Verbundglastafeln, insbesondere Verbundsicherheitsglastafeln, in einzelne Verbundglasscheiben, insbesondere in Verbundsicherheitsglasscheiben.

Unter einer Verbundglasscheibe versteht man im Allgemeinen eine aus zwei oder mehr Glasplatten mit gleicher oder unterschiedlicher Dicke ausgebildete Glasscheibe, wobei die Glasplatten durch eine Zwischenschicht aus Kunststoff miteinander verbunden sind. Spezielle Verbundglasscheiben weisen z. B. eine erste, innere Glasplatte aus einem üblicherweise unbeschichteten Glas und eine zweite, äußere Glasplatte aus einem beschichteten, insbesondere mit einer Wärmeschutzschicht versehenen, Glas auf. Die beiden Glasplatten sind dabei mit einer Folie miteinander verklebt. Bei Verbundsicherheitsglas besteht die Zwischenschicht zur Verbindung der einzelnen Glasplatten in der Regel aus einer elastischen, reißfesten Hochpolymerfolie, so dass beim Bruch der Scheiben die Bruchstücke an der Folie haften bleiben. Dies mindert das Risiko von Schnitt- oder Stichverletzungen. Auch weist die Verbundsicherheitsglasscheibe nach dem Bruch eine Resttragfähigkeit auf.

Die Verbundglasscheiben werden jedoch nicht einzeln in dem gewünschten Format hergestellt, sondern aus großformatigen Verbundglastafeln herausgetrennt, insbesondere herausgeschnitten.

In der DE 101 57 833 B4 ist eine Vorrichtung zum Aufteilen einer Verbundglastafel in einzelne Verbundglasscheiben offenbart, die einen Auflagetisch für die Verbundglastafel, eine Schneideinrichtung mit einem Ritz-, Brech- und Trennwerkzeug für das Aufteilen sowie eine über dem Auflagetisch zur Schneideinrichtung hin- und zurückfahrbar angeordnete Positionierbrücke zum Verschieben der Verbundglastafel auf dem Auflagetisch umfasst. Die Positionierbrücke weist eine Greifeinrichtung mit Greifern zum Greifen der Verbundglastafel auf, die derart ausgebildet ist, dass, bezogen auf die gegenläufige Bewegung der Positionierbrücke, die Verbundglastafel sowohl in ihrem hinteren, der Schneideinrichtung abgewandten Randbereich als auch in ihrem vorderen, der Schneideinrichtung zugewandten Randbereich greifbar ist.

Die DE 20 2014008305 U1 offenbart eine Vorrichtung zum Aufteilen von Glastafeln, insbesondere Verbundglastafeln aufweisend:
- einen Auflagetisch zur Aufnahme der zu schneidenden Verbundglastafel,
- eine Schneideinrichtung zum ober- und unterseitigen Ritzen der Verbundglastafel mit zumindest einer Schneidbrücke, welche den Auflagetisch überspannt,
- eine Positioniereinrichtung zum Positionieren der Verbundglastafel auf dem Auflagetisch vor und/oder während und/oder nach dem Schneidvorgang, wobei die Positioniereinrichtung mehrere klemmende Greifelemente aufweist, mittels denen die Verbundglastafel an einem Randbereich klemmend greifbar ist, wobei die Greifelemente mit der Antriebseinrichtung in Tischlängsrichtung unabhängig voneinander hin- und her verfahrbar antreibbar in Verbindung stehen, so dass mehrere nebeneinander angeordnete Verbundglastafeln unabhängig voneinander verfahrbar sind.

Aus der EP 2 431 339 B1 geht eine Vorrichtung zum Schneiden von Verbundglastafeln hervor, die eine erste und eine zweite Schneideinrichtung aufweist. Die beiden Schneideinrichtungen sind hintereinander angeordnet. Zudem weist die Vorrichtung eine Dreheinrichtung auf, mittels der die in der ersten Schneideinrichtung geschnittenen Verbundglasscheiben vor dem nächsten Schneidvorgang gedreht werden können. In der 2. Schneideinrichtung können mehrere nebeneinander angeordnete Verbundglasscheiben gleichzeitig geschnitten werden.

Die EP 2 570 371 A1 offenbart ein Verfahren zum Trennen bzw. Schneiden von Platten, die aus Glas, Kunststoff, Metall oder Holz bestehen können, mit den folgenden Verfahrensschritten:
- Bewegen der zu trennenden Platte von einer Zuführeinheit in eine Trenneinheit entlang einer Bewegungsrichtung in einer Bewegungsebene
- Trennen der Platte in der Trenneinheit entlang einer Trennrichtung, so dass ein restlicher Plattenteil und abgetrennter Plattenteil entsteht
- Zuführen des abgetrennten Plattenteils zu einer Rückführeinheit
- Rückführen des abgetrennten Plattenteils entlang einer Rückführrichtung mittels der Rückführeinheit
- Zuführens des abgetrennten Plattenteils zu einer Schwenkeinheit
- Verschwenken des abgetrennten Plattenteils mittels der Schwenkeinheit entlang einer Schwenkbewegung
- erneute Zuführung des abgetrennten und verschwenkten Plattenteils zur Zuführeinheit und zur Trenneinheit, und
- Trennen des abgetrennten Plattenteils durch die Trenneinheit entlang einer Trennrichtung.

Die EP 3 184 493 A1 offenbart eine Vorrichtung zum Trennen bzw. Schneiden von Verbundglastafelteilen, die um 90° gedreht und wieder zur Verbundglasschneideinrichtung zurückgeführt werden.

Aufgabe der vorliegenden Erfindung ist die Bereitstellung einer Verbundglasschneidanlage zum Aufteilen von Verbundglastafeln, insbesondere Verbundsicherheitsglastafeln, in einzelne Verbundglasscheiben, insbesondere Verbundsicherheitsglasscheiben, sowie ein Verfahren zum Aufteilen von Verbundglastafeln, insbesondere Verbundsicherheitsglastafeln, in einzelne Verbundglasscheiben, insbesondere in Verbundsicherheitsglasscheiben, wobei die Aufteilung effektiv und kostengünstig erfolgen soll.

Diese Aufgabe wird durch eine Verbundglasschneidanlage mit den Merkmalen von Anspruch 1 und ein Verfahren mit den Merkmalen von Anspruch 10 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Schematisch und stark vereinfacht eine perspektivische Ansicht der erfindungsgemäßen Verbundglasschneidanlage gemäß einer ersten Ausführungsform der Erfindung mit einer zu schneidenden Verbundglastafel
- Figur 2:: Eine Seitenansicht der erfindungsgemäßen Verbundglasschneidanlage gemäß Figur 1
- Figur 3:: Eine Draufsicht auf die erfindungsgemäße Verbundglasschneidanlage gemäß Figur 1
- Figur 4:: Eine Draufsicht auf ein unteres Stockwerk der erfindungsgemäßen Verbundglasschneidanlage gemäß Figur 1
- Figur 5:: Eine Draufsicht auf ein unteres Stockwerk der erfindungsgemäßen Verbundglasschneidanlage während des Transports der Verbundglastafel zu einer Verbundglasschneideinrichtung
- Figur 6:: Eine Draufsicht auf das untere Stockwerk mit in der Verbundglasschneideinrichtung angeordneter Verbundglastafel
- Figur 7:: Eine Draufsicht auf das untere Stockwerk mit Verbundglastafel während des Schneidvorgangs
- Figur 8:: Eine Draufsicht auf das untere Stockwerk nach dem Schneidvorgang
- Figur 9:: Eine Draufsicht auf das untere Stockwerk mit abgetrenntem Verbundglastafelteil während des Transports
- Figur 10:: Eine Draufsicht auf das untere Stockwerk mit in einer zweiten Hubund Transporteinrichtung angeordnetem abgetrennten Verbundglastafelteil
- Figur 11:: Eine perspektivische Ansicht des unteren Stockwerks gemäß Figur 10
- Figur 12:: Eine perspektivische Ansicht der Verbundglasschneidanlage mit angehobenem Hubtisch der zweiten Hub- und Transporteinrichtung
- Figur 13:: Eine Draufsicht auf die Verbundglasschneidanlage gemäß Figur 12

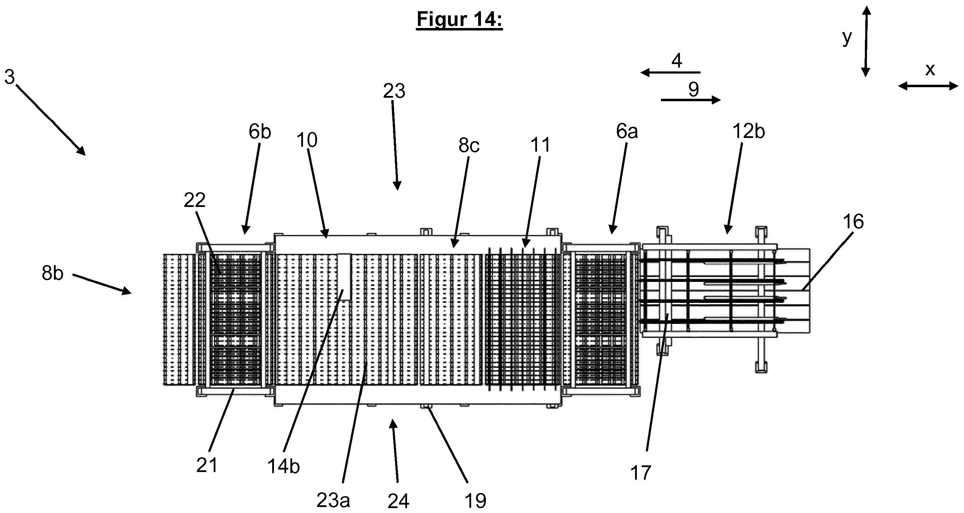

- Figur 14:: Eine Draufsicht auf die Verbundglasschneidanlage mit dem abgetrennten Verbundglastafelteil in einer Schwenkeinrichtung

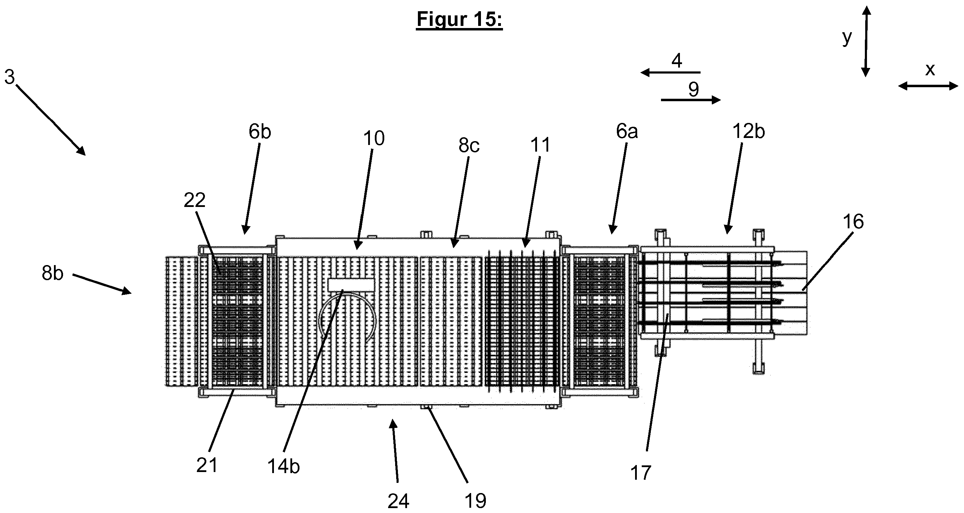

- Figur 15:: Eine Draufsicht auf die Verbundglasschneidanlage nach dem Schwenken des Verbundglastafelteils

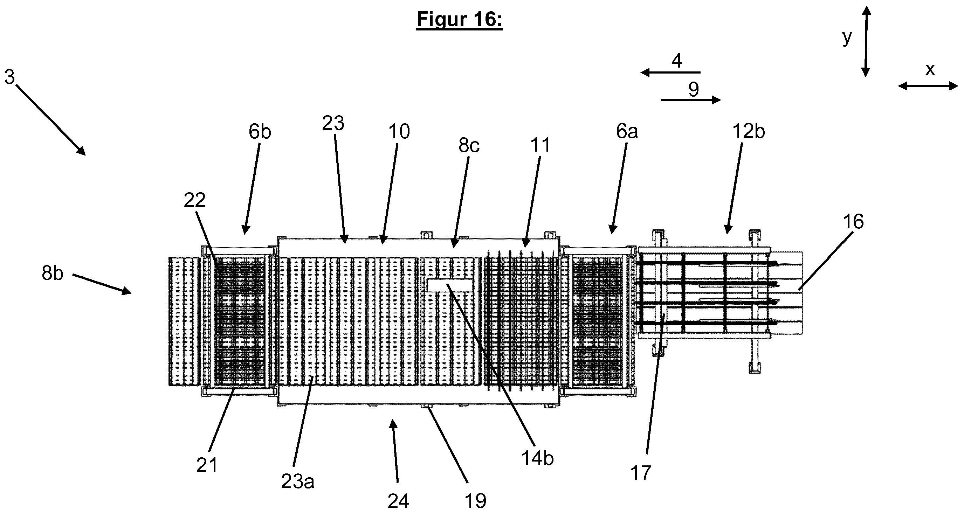

- Figur 16:: Eine Draufsicht auf die Verbundglasschneidanlage während des Rücktransports des verschwenkten Verbundglastafelteils
- Figur 17:: Eine Draufsicht auf die Verbundglasschneidanlage während des weiteren Rücktransports des verschwenkten Verbundglastafelteils
- Figur 18:: Eine perspektivische Ansicht der Verbundglasschneidanlage gemäß Figur 17 mit abgesenktem Hubtisch einer ersten Hub- und Transporteinrichtung
- Figur 19:: Eine perspektivische Ansicht der Verbundglasschneidanlage gemäß Figur 17 mit angehobenem Hubtisch der ersten Hub- und Transporteinrichtung
- Figur 20:: Eine Draufsicht auf die Verbundglasschneidanlage nach dem Quertransport des Verbundglastafelteils
- Figur 21:: Eine Draufsicht auf die Verbundglasschneidanlage mit auf dem Hubtisch der ersten Hub- und Transporteinrichtung angeordnetem Verbundglastafelteil
- Figur 22:: Eine perspektivische Ansicht der Verbundglasschneidanlage gemäß Figur 21
- Figur 23:: Eine perspektivische Ansicht der Verbundglasschneidanlage mit abgesenktem Hubtisch der ersten Hub- und Transporteinrichtung
- Figur 24:: Eine Draufsicht auf das untere Stockwerk der Verbundglasschneidanlage mit in der Verbundglasschneideinrichtung angeordnetem Verbundglastafelteil
- Figur 25:: Eine Draufsicht auf das untere Stockwerk der Verbundglasschneidanlage mit in der Verbundglasschneideinrichtung angeordnetem Verbundglastafelteil
- Figur 26:: Eine Draufsicht auf das untere Stockwerk der Verbundglasschneidanlage während des Schneidvorgangs

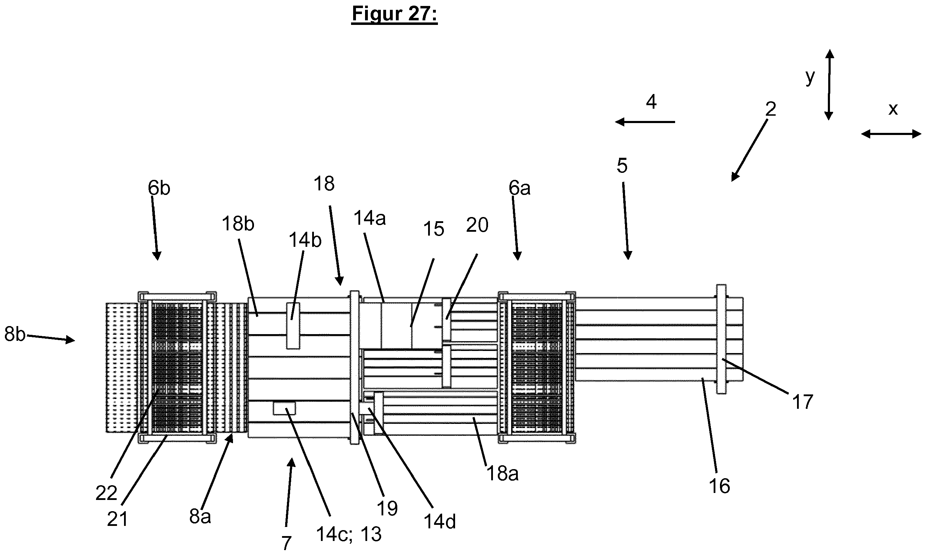

- Figur 27:: Eine Draufsicht auf das untere Stockwerk der Verbundglasschneidanlage nach dem Schneidvorgang
- Figur 28:: Eine Draufsicht auf das untere Stockwerk der Verbundglasschneidanlage mit abgetrenntem Verbundglastafelteil und auf Endmaß geschnittener Verbundglasscheibe in der zweiten Hub- und Transporteinrichtung
- Figur 29:: Eine Draufsicht auf das untere Stockwerk der Verbundglasschneidanlage mit abgetrenntem Verbundglastafelteil in der zweiten Hub- und Transporteinrichtung und auf Endmaß geschnittener Verbundglasscheibe in einer zweiten Förderstrecke
- Figur 30:: Eine Verbundglastafel mit Schneidplan

Die erfindungsgemäße Verbundglasschneidanlage 1 weist ein erstes, unteres Stockwerk 2 und ein darüber angeordnetes, zweites, oberes Stockwerk 3 auf. Zudem weist die Verbundglasschneidanlage 1 eine horizontale Längsrichtung x bzw. x-Richtung, eine dazu senkrechte, horizontale Querrichtung y bzw. y-Richtung und eine vertikale Höhenrichtung z bzw. z-Richtung auf.

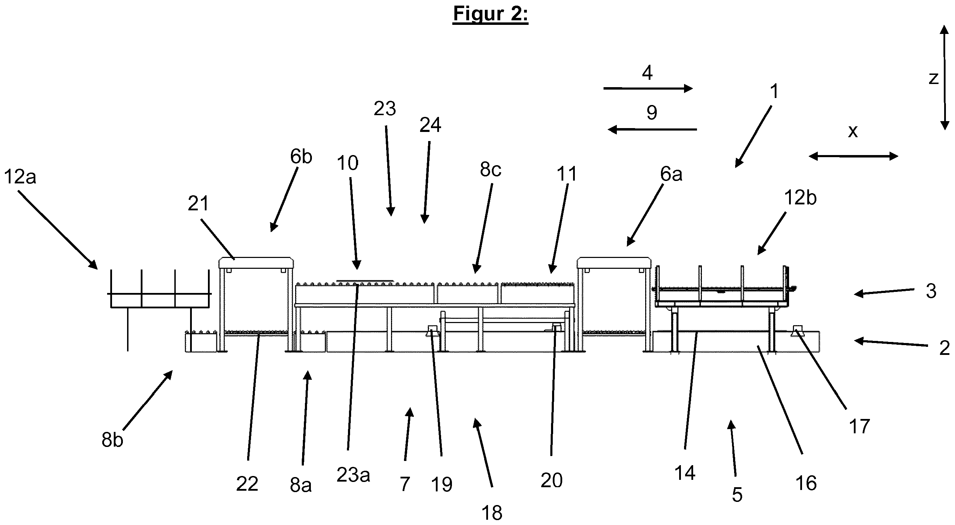

Das untere Stockwerk 2 weist in eine zur x-Richtung parallele Hauptförderrichtung 4 einander nachgeordnet eine Randentschichtungseinrichtung 5, eine erste Hub- und Transporteinrichtung 6a, eine Verbundglasschneideinrichtung 7, eine erste Förder- bzw. Transportstrecke 8a, eine zweite Hub- und Transporteinrichtung 6b und eine weitere, zweite Förder- bzw. Transportstrecke 8b sowie vorzugsweise eine erste Speichereinrichtung 12a (nur in Fig. 2 schematisch dargestellt) auf.

"Nachgeordnet" bzw. "Vorgeordnet" im Sinne der Erfindung ist dabei im Sinne der Reihenfolge zu verstehen, in der die einzelnen Einrichtungen 5-8b durchlaufen werden. Eine vorgeordnete Einrichtung wird zuerst durchlaufen, eine nachgeordnete Einrichtung danach.

Ausgehend von der zweiten Hub-und Transporteinrichtung 6b weist das obere Stockwerk 3 in eine zur Hauptförderrichtung 4 entgegengesetzte Rückführrichtung 9 einander nachgeordnet eine Schwenkeinrichtung 10, eine weitere, dritte Förder- bzw. Transportstrecke 8c, eine Quertransporteinrichtung 11, die zweite Hub- und Transporteinrichtung 6b und vorzugsweise eine zweite Speichereinrichtung 12b auf.

Die beiden Hub-und Transporteinrichtungen 6a;6b, die Schwenkeinrichtung 10, die dritte Förder- bzw. Transportstrecke 8c und die Quertransporteinrichtung 11 bilden eine erfindungsgemäße Rückführeinrichtung 24 der erfindungsgemäßen Verbundglasschneidanlage 1.

Die Randentschichtungseinrichtung 5 dient in an sich bekannter Weise zum Abtragen einer oberflächlichen Schutzbeschichtung sowie einer darunter angeordneten Funktionsbeschichtung von einer in einzelne Verbundglasscheiben 13 zu zerteilenden Verbundglastafel 14. Denn die fertig zugeschnittenen Verbundglasscheiben 13 werden in der Regel zu Funktionseinheiten, z. B. Isolierglaseinheiten, weiterverarbeitet, wobei die Scheibenränder der Verbundglasscheiben 13 mit z. B. Abstandhaltereinrichtungen verklebt werden. Für diesen Randverbund werden Randverbundkleber verwendet, wobei die Randverbundkleber ausschließlich für den direkten Verbund mit Glasoberflächen und nicht mit den Funktionsschichten ausgelegt sind. Die Verbundglastafeln 14 müssen deshalb im Bereich der Verklebung entschichtet werden. Diesen Vorgang bezeichnet man als Randentschichtung. Die Randentschichtung erfolgt dabei entlang der Verbundglastafelkanten und/oder entlang von späteren Schneid- bzw. Ritz- bzw. Trennlinien 15, entlang derer die Verbundglastafeln 14 nach dem Entschichten in die einzelnen Verbundglasscheiben 13 zerteilt werden.

Das Abtragen der Funktionsschichten erfolgt beispielsweise in an sich bekannter Weise mittels mechanischer Abtragung durch Schleifwerkzeuge oder durch Sandstrahlen. Es kann aber auch mit Gasbrennern erfolgen. Vorzugsweise erfolgt es gemäß einem der in der deutschen Patentanmeldung DE 10 2018 107 697.5 beschriebenen Verfahren mittels Laser und gegebenenfalls mechanischem Abschleifen.

Dazu weist die Randentschichtungseinrichtung 5 vorzugsweise einen Auflagetisch 16 zur Aufnahme der Verbundglastafel 14 sowie eine diesen, insbesondere oberseitig, in y-Richtung überspannende Werkzeugträgerbrücke 17 auf. Der Auflagetisch 16 weist insbesondere eine horizontale Auflagefläche zur Aufnahme der Verbundglastafel 14 auf. Die Werkzeugträgerbrücke 17 ist vorzugsweise in x-Richtung relativ zum Auflagetisch 16 über der Verbundglastafel 14 hin- und her verfahrbar. Hierzu sind entsprechende Antriebsmittel vorhanden.

Zudem weist die Randentschichtungseinrichtung 5 ein Entschichtungswerkzeug auf, welches an der Werkzeugträgerbrücke 17 in y-Richtung hin- und her verfahrbar gelagert ist. Hierzu sind ebenfalls entsprechende Antriebsmittel vorhanden. Je nach Entschichtungsverfahren weist das Entschichtungswerkzeug dabei zumindest ein entsprechendes Entschichtungsmittel, vorzugsweise zumindest einen Laser und/oder zumindest ein Schleifwerkzeug, vorzugsweise ein um die z-Achse und eine horizontale Achse drehbares Schleifrädchen, und/oder zumindest einen Gasbrenner auf.

Des Weiteren weist die Randentschichtungseinrichtung 5 vorzugsweise Mittel zum Verfahren der Verbundglastafel 14 in x-Richtung relativ zum Auflagetisch 16 auf. Bei den Mitteln handelt es sich z.B. um anheb- und absenkbare Transportriemen. Die Transportriemen sind in Schlitzen des Auflagetisches 16 versenkbar.

Durch eine Kombination bzw. Überlagerung einer Bewegung des Entschichtungswerkzeugs in y-Richtung entlang der Werkzeugträgerbrücke 17, einer Bewegung der Werkzeugträgerbrücke 17 in x-Richtung, sowie gegebenenfalls Drehungen des Schleifrädchens um seine Drehachsen können in an sich bekannter Weise beliebige, also auch bogenförmige, Entschichtungskonturen entlang der späteren Trennlinien 15 erzeugt werden.

Des Weiteren kann die Randentschichtungseinrichtung 5 Mittel zum Kennzeichnen der fertigen Verbundglasscheiben 13 angebracht werden. Bei diesen Mitteln kann es sich z.B. um Mittel zur Laserkennzeichnung oder einen Etikettendrucker handeln. Die Mittel zum Kennzeichnen sind vorzugsweise am Entschichtungswerkzeug angeordnet, also mit diesem verfahrbar. Die Kennzeichnung bzw. Markierung enthält Informationen über die Verbundglasscheibe, wie z. B. über das Material, deren Abmessungen etc.. Es kann sich z.B. um einen Barcode handeln.

Die Verbundglasschneideinrichtung 7 dient in an sich bekannter Weise zum Aufteilen der randentschichteten Verbundglastafel 14 in einzelne Verbundglasscheiben 13. Insbesondere dient sie zum Abtrennen von Verbundglastafelteilen 14b von der Verbundglastafel 14, und erfindungsgemäß zum weiteren Aufteilen bzw. Zerteilen der abgetrennten Verbundglastafelteile 14b, bis diese ihr Endmaß erreicht haben. Sie dient also auch zum Abtrennen eines weiteren Verbundglastafelteils 14c von einem bereits abgetrennten Verbundglastafelteil 14b, so dass ein weiterer abgetrennter Verbundglastafelteil 14c und ein Rest-Verbundglastafelteil 14d gebildet wird.

Dazu weist die Verbundglasschneideinrichtung 7 vorzugsweise einen Auflagetisch 18 zur Aufnahme der Verbundglastafel 14 und/oder der abgetrennten Verbundglastafelteile 14b-d sowie eine sich in y-Richtung erstreckende, vorzugsweise feststehende, Doppelschneidbrücke 19 mit Schneid-, Brech- und Trennwerkzeugen auf. Der Auflagetisch 18 weist insbesondere eine horizontale Auflagefläche zur Aufnahme der Verbundglastafel 14 und/oder der abgetrennten Verbundglastafelteile 14b-d auf. Zudem ist der Auflagetisch 18 in an sich bekannter Weise im Bereich der Doppelschneidbrücke 19 geteilt bzw. geschlitzt bzw. weist einen sich in y-Richtung erstreckenden Spalt bzw. Schlitz auf. Der Spalt dient zur Aufnahme der Schneid- und Brechwerkzeuge. Erteilt den Auflagetisch 18 in zwei Auflagetischteile 18a;b.

Insbesondere weist die Doppelschneidbrücke 19 eine obere und eine untere Schneidbrücke auf. Die obere Schneidbrücke überspannt den Auflagetisch 18 oberseitig, die untere Schneidbrücke überspannt den Auflagetisch 18 unterseitig.

Jede Schneidbrücke weist jeweils ein Schneid- bzw. Ritzwerkzeug, vorzugsweise jeweils ein Schneidrädchen, zum ober- bzw. unterseitigen Ritzen der Verbundglastafel 14 und/oder eines Verbundglastafelteils 14b-d entlang der Trennlinie 15 auf. Dazu verfahren die Schneid- bzw. Ritzwerkzeuge, vorzugsweise gleichzeitig, in y-Richtung entlang der jeweiligen Schneidbrücke.

Die Schneidrädchen sind dabei in an sich bekannter Weise um eine um eine horizontale, zur Glastafelebene der Verbundglastafel 14 und/oder des Verbundglastafelteiles 14b-d parallele Radachse frei oder angetrieben drehbar. Die Radachsen sind senkrecht zur Ritzlinie. Zudem sind die Schneidrädchen vorzugsweise auch in an sich bekannter Weise um eine vertikale Achse normal zur Fläche der Verbundglastafel 14 und/oder des Verbundglastafelteils 14b-d frei oder angetrieben drehbar.

Durch eine Kombination bzw. Überlagerung einer Bewegung der Schneidrädchen in y-Richtung entlang der Schneidbrücke, einer Bewegung der Verbundglastafel 14 und/oder des Verbundglastafelteils 14b-d in x-Richtung, sowie Drehungen des Schneidrädchens um seine beiden Drehachsen können in an sich bekannter Weise beliebige, also auch bogenförmige Schnitt- bzw. Ritzkonturen entlang der späteren Trennlinien 15 erzeugt werden.

Sind die Schneidrädchen angetrieben drehbar, ist eine entsprechende Antriebseinrichtung vorhanden, mit der sie in Verbindung stehen.

Jede Schneidbrücke weist zudem jeweils ein Brechwerkzeug, z.B. jeweils eine Brechrolle, zum Brechen der geritzten Verbundglastafel 14 und/oder eines Verbundglastafelteils 14b-d entlang der Trennlinie 15 auf. Dazu verfahren die Brechrollen nacheinander in y-Richtung entlang der Schneidbrücke, so dass nacheinander zuerst die eine der beiden Glasplatten der Verbundglastafel 14 und/oder eines Verbundglastafelteils 14b-d gebrochen wird und dann die andere.

Die Brechrollen sind analog zu den Schneidrädchen um eine um eine horizontale, zur Glastafelebene parallele Radachse frei oder angetrieben drehbar und vorzugsweise auch in an sich bekannter Weise um eine vertikale Achse normal zur Glastafelebene frei oder angetrieben drehbar. Sind die Brechrollen angetrieben drehbar, ist eine entsprechende Antriebseinrichtung vorhanden, mit der sie in Verbindung stehen.

Durch eine Kombination bzw. Überlagerung einer Bewegung der Brechrollen in y-Richtung entlang der Schneidbrücke, einer Bewegung der Verbundglastafel 14 und/oder des Verbundglastafelteils 14b-d in x-Richtung, sowie Drehungen der Brechrolle um ihre beiden Drehachsen können die beiden Glasplatten in an sich bekannter Weise entlang beliebiger, also auch bogenförmiger Trennlinien 15 gebrochen werden.

Es können aber auch andere bekannte Brechwerkzeuge, zum Beispiel Brechleisten und Niederhalter und/oder Mittel zum Kippen und/oder Anheben/Absenken zumindest einer Auflagetischhälfte 18a;18b vorhanden sein.

Zudem weist die Verbundglasschneideinrichtung 7 in sich bekannter Weise Mittel zum Trennen der Folie auf. Hierbei kann es sich zum Beispiel um ein Messer und/oder einen Laser und/oder eine Schmelzeinrichtung handeln, welche ebenfalls in y-Richtung entlang der Schneidbrücke 19 verfahren.

Des Weiteren weist die Verbundglasschneideinrichtung 7 mehrere, in y-Richtung zu einander benachbart angeordnete Positionierbrücken 20 auf, welche den ersten Auflagetischteil 18a in y-Richtung überspannen. Die Positionierbrücken 20 sind jeweils in x-Richtung relativ zu dem Auflagetischteil 18a verfahrbar. Hierzu sind entsprechende Antriebsmittel vorhanden. Dabei sind die Positionierbrücken 20 unabhängig voneinander bzw. einzeln und/oder gekoppelt verfahrbar. Die Positionierbrücken 20 sind zudem in Hauptförderrichtung 4 gesehen der Schneidbrücke 19 vorgeordnet angeordnet. Sie weisen zudem in an sich bekannter Weise Greifer, insbesondere klemmende oder saugende Greifer zum Greifen der Verbundglastafel 14 und/oder des Verbundglastafelteils 14b-d auf. Im Falle der klemmenden Greifer erfolgt das Greifen in an sich bekannter Weise an den der Schneidbrücke 19 abgewandten Glastafelkanten. Die Greifer sind in an sich bekannter Weise anheb- und absenkbar, so dass eine Verbundglastafel 14 und/oder des Verbundglastafelteils 14b-d zunächst unter den Positionierbrücken 20 hindurch fahren kann.

Die erste Auflagetischhälfte 18a weist zudem weitere Transportmittel zum Transport der Verbundglastafel 14 und/oder des Verbundglastafelteils 14b-d in oder entgegen die Hauptförderrichtung 4 auf. Diese dienen insbesondere zur Einförderung der Verbundglastafel 14 und/oder des Verbundglastafelteils 14b-d in die Verbundglasschneideinrichtung 7, bis die Positionierbrücken 20 greifen können. Vorzugsweise handelt es sich um ein Luftkissen und anheb- und absenkbare Transportriemen und/oder -rollen. Diese sind in Schlitzen der ersten Auflagetischhälfte 18a versenkbar. Dabei sind die Transportriemen und/oder - rollen vorzugsweise analog zu den Positionierbrücken 20 in in Querrichtung y zueinander benachbarte Segmente aufgeteilt, wobei die Segmente unabhängig voneinander ansteuerbar sind. Dadurch können die Verbundglastafel 14 und/oder daneben angeordnete Verbundglastafelteile 14b-d unabhängig voneinander transportiert werden.

Der zweite, der Schneidbrücke 19 in Hauptförderrichtung 4 nachgeordnete Auflagetischteil 18b weist zudem Mittel zum Transport bzw. Förderung der Verbundglastafelteile 14b-d in oder entgegen die Hauptförderrichtung 4 auf. Hierbei handelt es sich vorzugweise ebenfalls um, um ein Luftkissen und anheb- und absenkbare Transportriemen und/oder -rollen. Diese sind in Schlitzen der zweiten Auflagetischhälfte 18a versenkbar. Auch die Transportriemen und/oder - rollen der zweiten Auflagetischhälfte 18a sind vorzugsweise analog zu den Positionierbrücken 20 in in Querrichtung y zueinander benachbarte Segmente aufgeteilt, die unabhängig voneinander ansteuerbar sind, um nebeneinander angeordnete Verbundglastafelteile 14b-d unabhängig voneinander transportieren zu können.

Die beiden Hub- und Transporteinrichtungen 6a;6b weisen jeweils ein Traggestell 21 und einen Hubtisch 22 zur Aufnahme eines Verbundglastafelteils 14b-d auf. Der Hubtisch 22 ist entlang des Traggestells 21 vertikal bzw. in z-Richtung auf- und ab verfahrbar. Hierzu sind entsprechende Antriebsmittel vorhanden.

Zudem weist der Hubtisch 22 vorzugsweise zwei Ebenen bzw. Stockwerke mit jeweils einer Tischplatte auf. Die erste, vorzugsweise untere, Tischplatte dient dabei zur Aufnahme und zum Anheben und Absenken der Verbundglastafelteil 14b-d.

Die zweite, vorzugsweise obere, Tischplatte dient bei der ersten Hub- und Transporteinrichtung 6a zur Aufnahme einer Rest-Verbundglastafel 14a und zur Einförderung der Rest-Verbundglastafel 14a in die zweite Speichereinrichtung 12b, worauf später näher eingegangen wird.

Bei der zweiten Hub- und Transporteinrichtung 6b dient die zweite Tischplatte zur Aufnahme von Verbundglastafelteilen 14b-d und zur Einförderung der Verbundglastafelteile 14b-d in die erste Speichereinrichtung 12a, worauf später näher eingegangen wird.

Die beiden Tischplatten weisen jeweils Mittel zum Transport der (Rest-)Verbundglastafel 14;14a bzw. der Verbundglastafelteile 14b-d in x-Richtung und vorzugsweise auch in y-Richtung auf. Hierbei handelt es sich jeweils um, zumindest teilweise, angetriebene, vorzugsweise anheb- und absenkbare, Transportrollen- und/oder -riemen. Die Transportriemen und/oder -rollen zumindest der ersten Tischplatte sind vorzugsweise ebenfalls analog zu den Positionierbrücken 20 in in Querrichtung y zueinander benachbarte Segmente aufgeteilt, die unabhängig voneinander ansteuerbar sind, um nebeneinander angeordnete Verbundglastafelteile 14b-d unabhängig voneinander transportieren zu können. Zudem sind die Transportriemen und/oder -rollen vorzugsweise in Schlitzen der Tischplatten versenkbar. Die Quertransportmittel dienen unter anderem zum Ausfördern der Verbundglastafelteile 14b-d aus der Verbundglasschneidanlage 1.

Zudem weist die zweite Tischplatte vorzugsweise Mittel, vorzugsweise Greifer, zum Ein- und Auslagern der Verbundglastafelteile 14b-d oder der Rest-Verbundglastafel 14a in die jeweilige Speichereinrichtung 12a;b auf.

Die Förder- bzw. Transportstrecken 8a-c weisen jeweils Mittel zum Transport der Verbundglastafelteile 14b-d in x-Richtung und vorzugsweise auch in y-Richtung auf. Hierbei handelt es sich vorzugweise um, zumindest teilweise angetriebene, vorzugsweise anheb- und absenkbare, Förder- bzw. Transportrollen und/oder -riemen. Die Quertransportmittel dienen unter anderem zum Ausfördern der Verbundglastafelteile 14b-d aus der Verbundglasschneidanlage 1. Auch die Förder- bzw. Transportrollen und/oder -riemen der Förder- bzw. Transportstrecken 8a-c sind vorzugsweise analog zu den Positionierbrücken 20 in in Querrichtung y zueinander benachbarte Segmente aufgeteilt, die unabhängig voneinander ansteuerbar sind.

Die Schwenkeinrichtung 10 weist ebenfalls einen Auflagetisch 23 mit einer, vorzugsweise gitterartigen Auflageplatte 23a auf. Der Auflagetisch 23 weist Mittel zum Transport bzw. Förderung der Verbundglastafelteile 14b-d in x-Richtung, insbesondere in Rückführrichtung 9, auf. Hierbei handelt es sich vorzugweise ebenfalls um, zumindest teilweise angetriebene, vorzugsweise anheb- und absenkbare, Förder- bzw. Transportrollen und/oder -riemen. Auch die Förder- bzw. Transportrollen und/oder -riemen der Schwenkeinrichtung 10 sind vorzugsweise analog zu den Positionierbrücken 20 in in Querrichtung y zueinander benachbarte Segmente aufgeteilt, die unabhängig voneinander ansteuerbar sind.

Außerdem weist die Schwenkeinrichtung 10 Mittel zum Schwenken bzw. Drehen eines Verbundglastafelteils 14b-d um die vertikale z-Achse auf. Hierbei handelt es sich vorzugsweise um die anheb- und absenkbare, vorzugsweise gitterartige, Auflageplatte 23a des Auflagetisches 23 mit motorischem Drehantrieb.

Die Quertransporteinrichtung 11 weist zumindest teilweise angetriebene, vorzugsweise anheb- und absenkbare, Förder- bzw. Transportrollen und/oder -riemen zum Transport eines Verbundglastafelteils 14b-d in x-Richtung und in Querrichtung y bzw. y-Richtung auf. Auch die Förder- bzw. Transportrollen und/oder -riemen der Quertransporteinrichtung 11 sind vorzugsweise analog zu den Positionierbrücken 20 in in Querrichtung y zueinander benachbarte Segmente aufgeteilt, die unabhängig voneinander ansteuerbar sind.

Die Speichereinrichtungen 12a; dient, wie bereits erläutert, zur Zwischenspeicherung der Verbundglastafelteile 14b-d oder der Rest-Verbundglastafel 14a, falls dies notwendig ist. Hierzu weisen die Speichereinrichtungen 12a;b jeweils mehrere übereinander angeordnete Fächer auf.

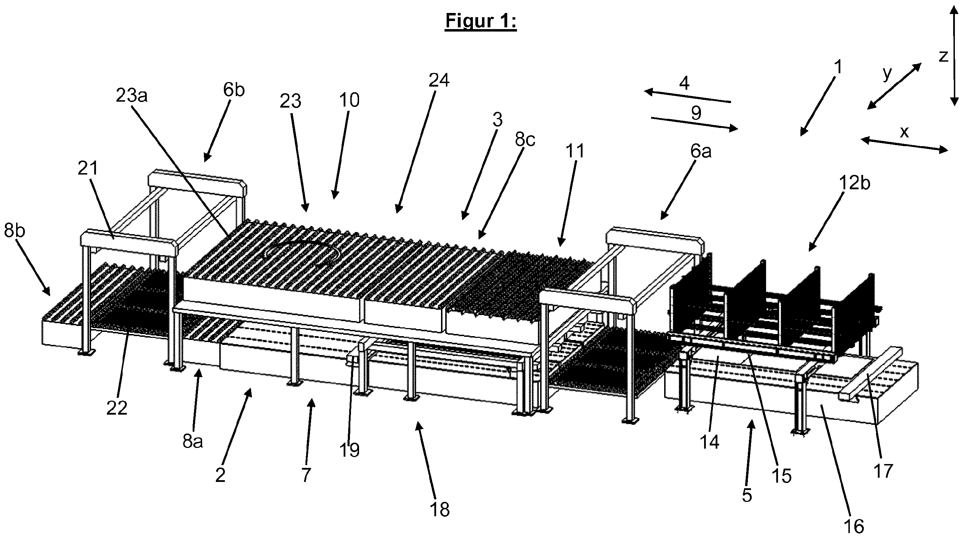

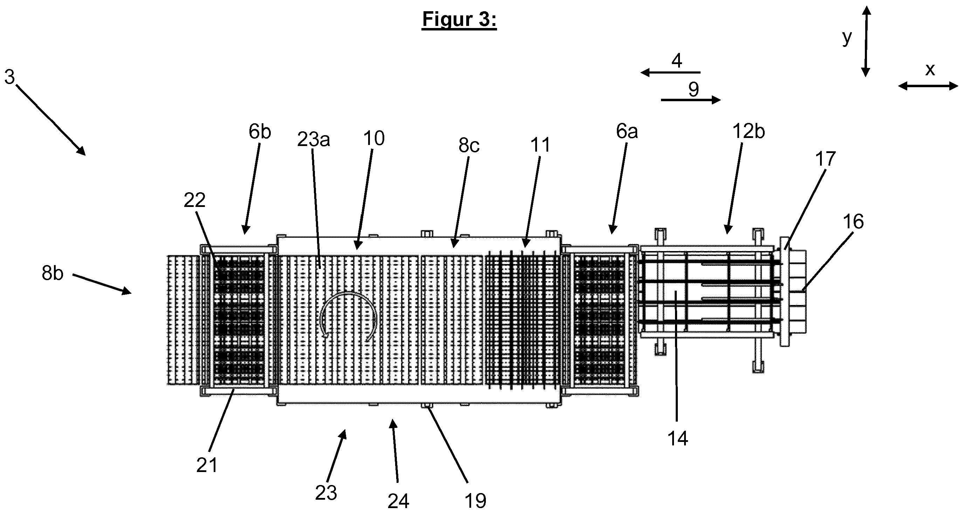

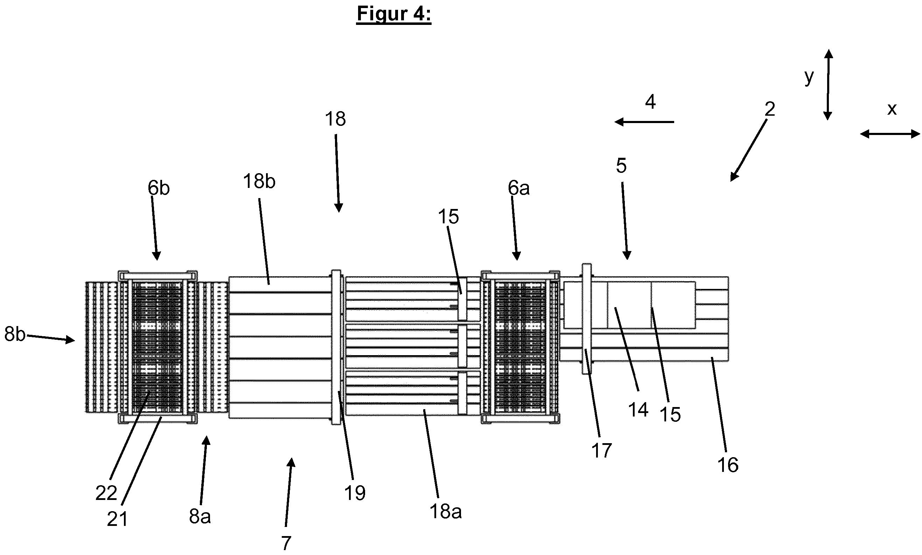

Im Folgenden wird nun das mit der erfindungsgemäßen Verbundglasschneidanlage 1 durchgeführte erfindungsgemäße Verbundglasschneidverfahren näher erläutert:
Die zu schneidende Verbundglastafel 14 wird zunächst der Randentschichtungseinrichtung 5 zugeführt (Fig. 1-4). In der Randentschichtungseinrichtung 5 erfolgt dann in an sich bekannter Weise das Randentschichten entlang der späteren Trennlinien 15 und gegebenenfalls entlang der Glastafelkanten.

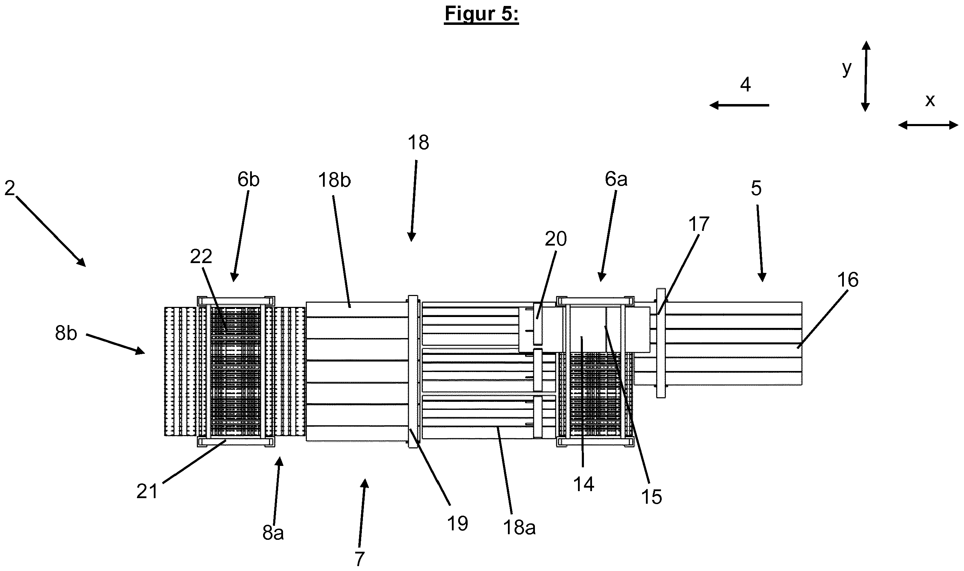

Danach wird die randentschichtete Verbundglastafel 14 in Hauptförderrichtung 4 zur Verbundglasschneideinrichtung 7 gefördert. Der Hubtisch 22 der ersten Hub- und Transporteinrichtung 6a befindet sich dazu in seiner unteren Stellung, in der die Tischoberfläche der ersten Tischplatte auf gleicher Höhe wie die Tischoberflächen der beiden Auflagetische 16;18 liegt. Somit wird die Verbundglastafel 14 über den Hubtisch 22 drüber gefördert beziehungsweise transportiert (Fig. 5).

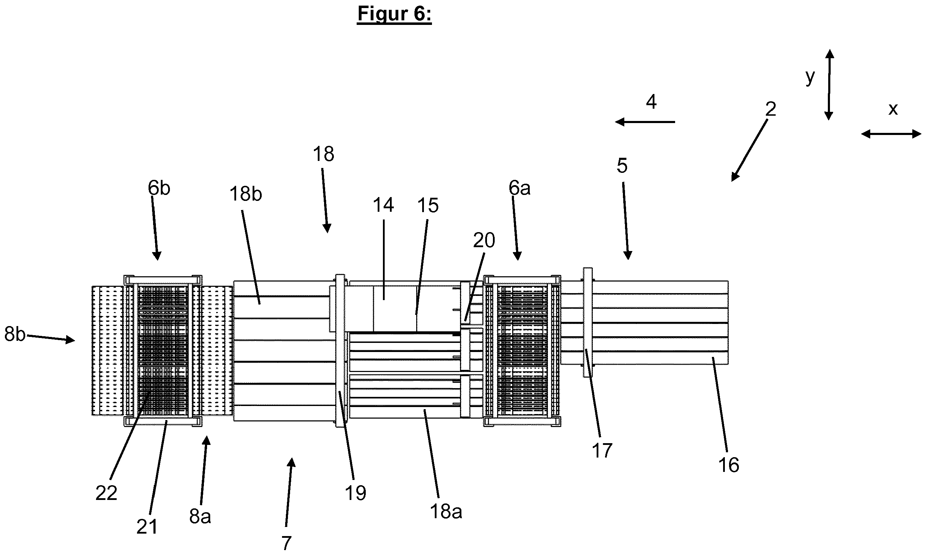

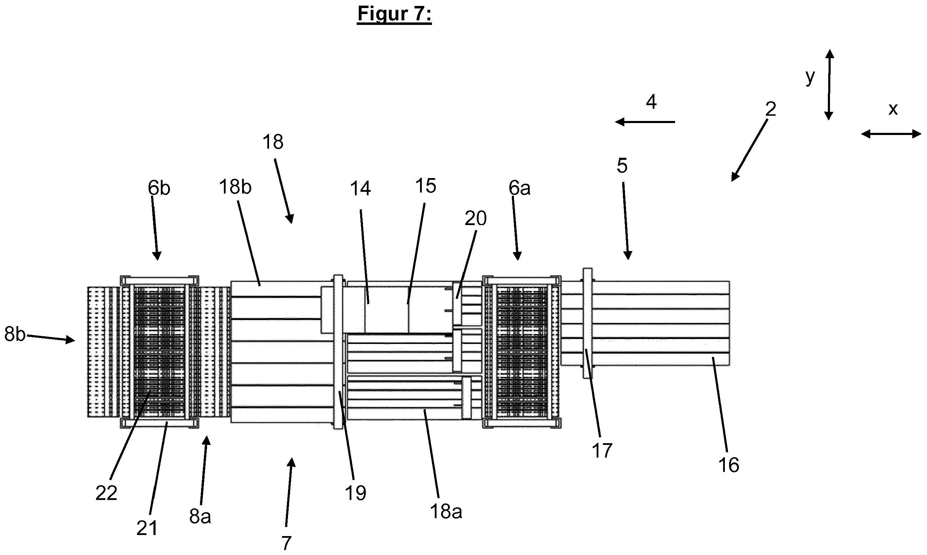

Die genaue Positionierung der Verbundglastafel 14 in der Verbundglasschneideinrichtung 7 erfolgt mittels einer oder mehrerer Positionierbrücken 20. Diese greifen die Verbundglastafel 14 und bewegen sie in Hauptförderrichtung 4 und/oder Rückführrichtung 9 und positionieren sie dadurch relativ zur Schneidbrücke 19 (Fig. 6, 7).

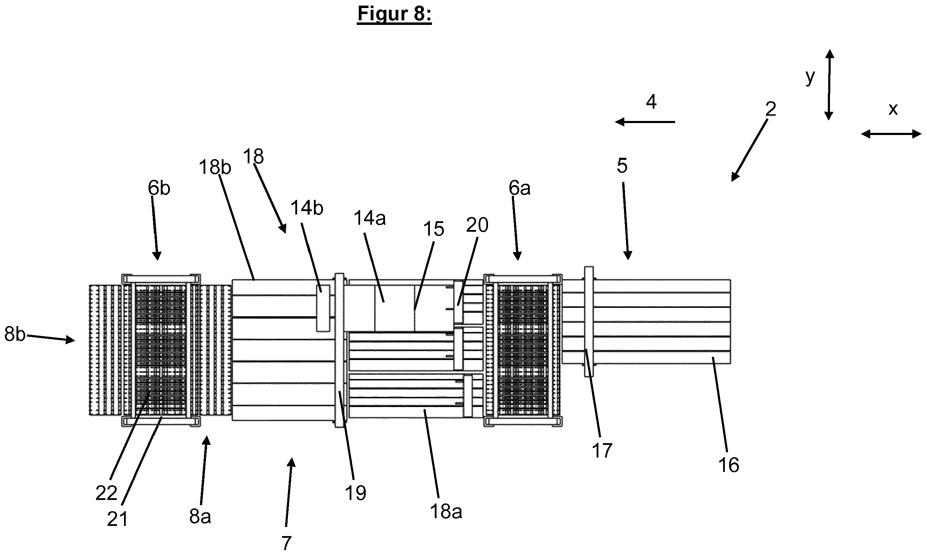

Mittels der sich an der Schneidbrücke 19 befindlichen Werkzeuge wird die Verbundglastafel 14 wie oben beschrieben ober- und unterseitig geritzt und entlang der Ritzlinie in eine, insbesondere quaderförmige, Rest-Verbundglastafel 14a und einen abgetrennten, insbesondere quaderförmigen, Verbundglastafelteil 14b getrennt (Fig. 8). Die Trennlinie 15 ist dabei vorzugsweise parallel zur y-Richtung. Das heißt, die Verbundglastafel 14 ist während des Schneidvorgangs stationär und nur die Schneidwerkzeuge werden in y-Richtung verfahren. Einen derartigen Schnitt, der über die gesamte Breite der Verbundglastafel 14 in y-Richtung geht, nennt man auf dem Fachgebiet auch "x-Schnitt" und den entstandenen Verbundglastafelteil 14b nennt man "Travere".

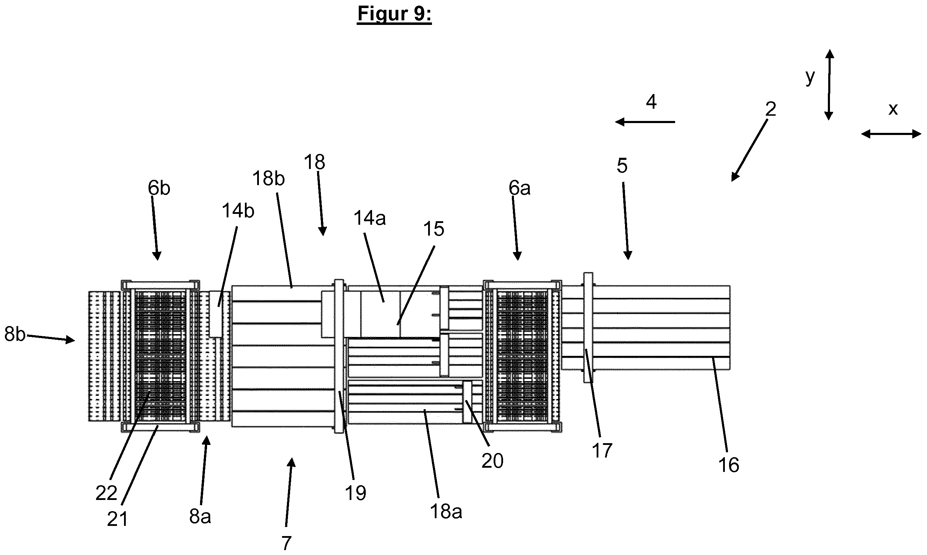

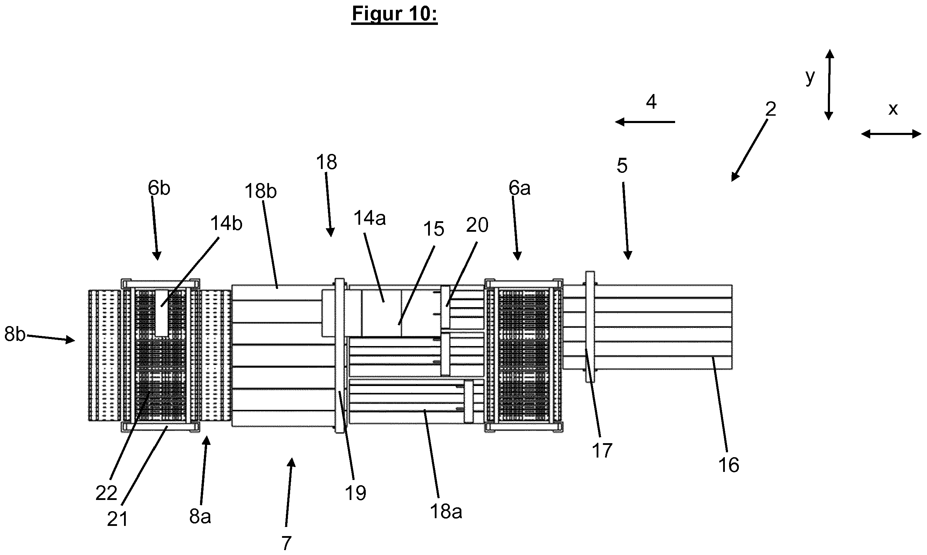

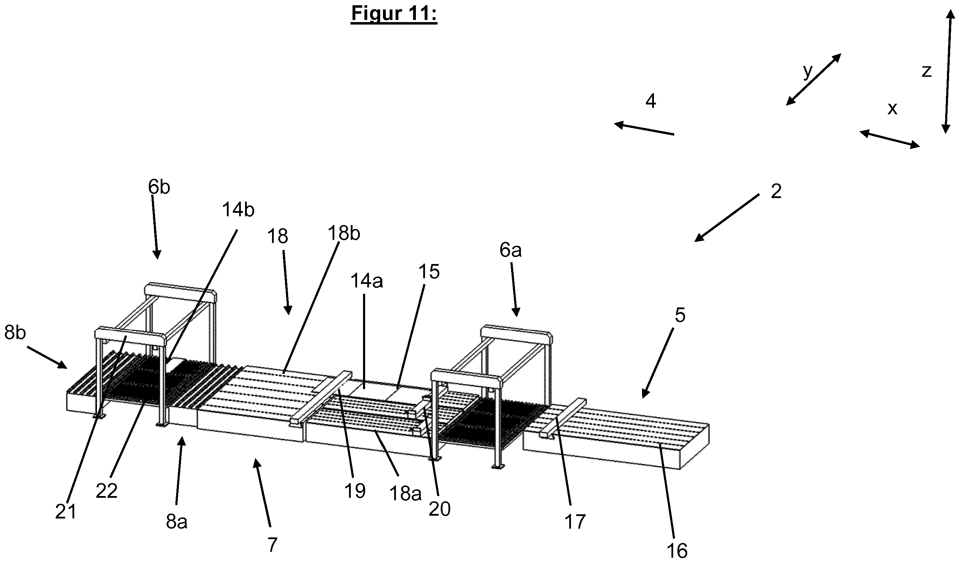

Der abgetrennte Verbundglastafelteil 14b wird dann mittels der Fördermittel der zweiten Auflagetischhälfte 18b und der ersten Förderstrecke 8a weiter in Hauptförderrichtung 4 bis auf die erste Tischplatte des sich in seiner unteren Stellung befindlichen Hubtisches 22 der zweiten Hub- und Transporteinrichtung 6b gefördert (Fig. 9-11).

Vorzugsweise gleichzeitig wird die Rest-Verbundglastafel 14a mittels einer oder mehrerer Positionierbrücken 20 in Hauptförderrichtung 4 ein Stück weiter gefördert und in die Position für den nächsten Schneidvorgang gebracht (Fig. 9-11).

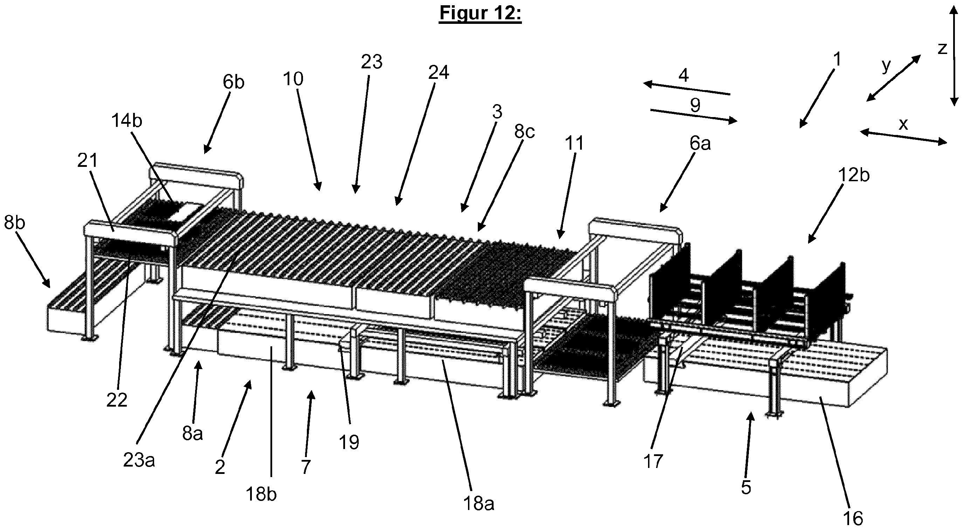

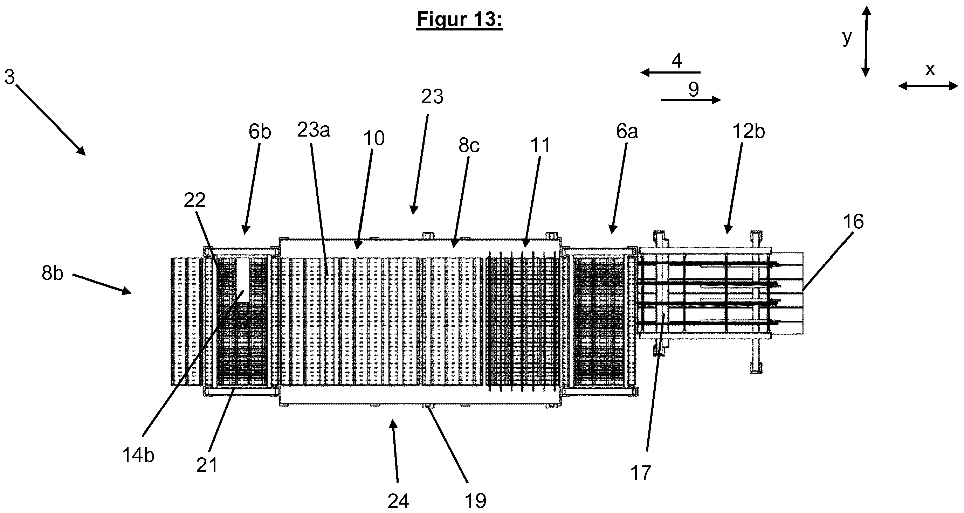

Anschließend wird der Hubtisch 22 mit dem darauf angeordneten abgetrennten Verbundglastafelteil 14b angehoben bis die Tischoberfläche der ersten Tischplatte des Hubtisches 22 auf gleicher Höhe wie die Oberfläche des Auflagetisches 23 der Schwenkeinrichtung 10 liegt (Fig. 12, 13).

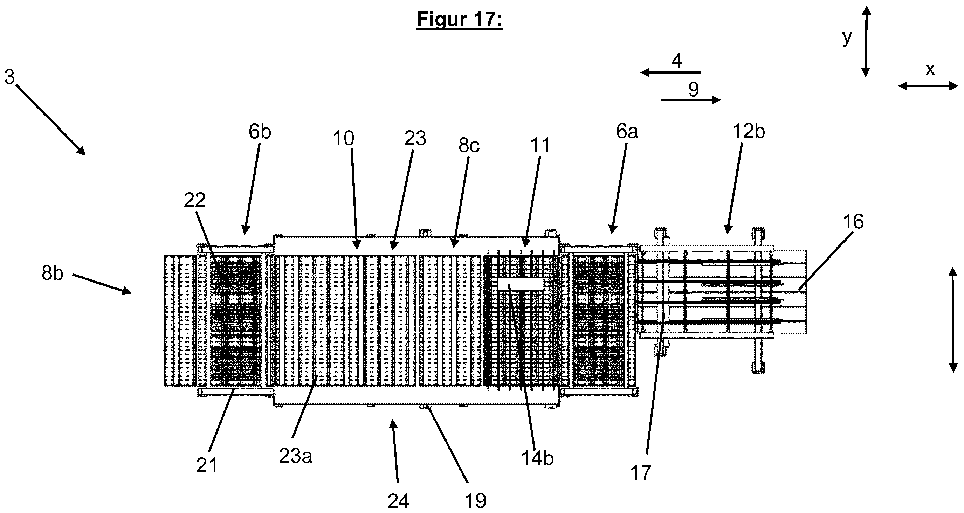

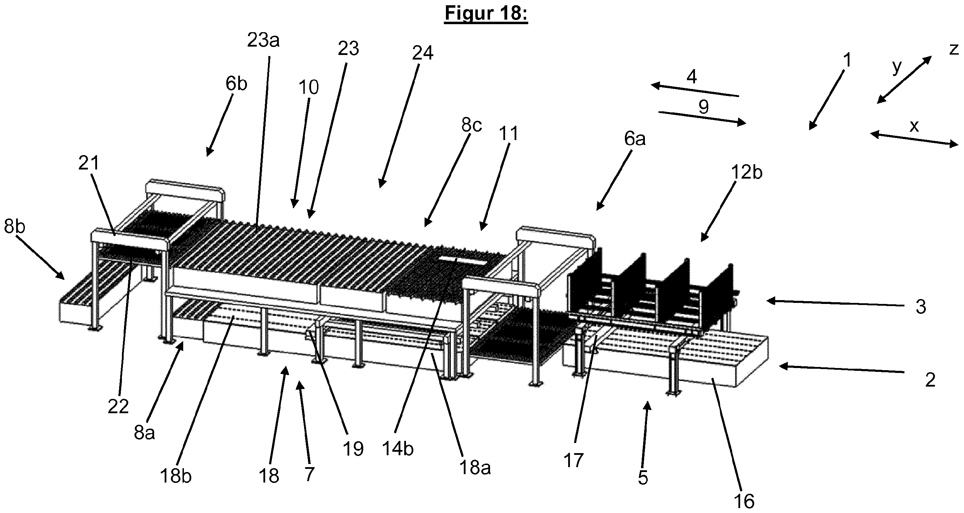

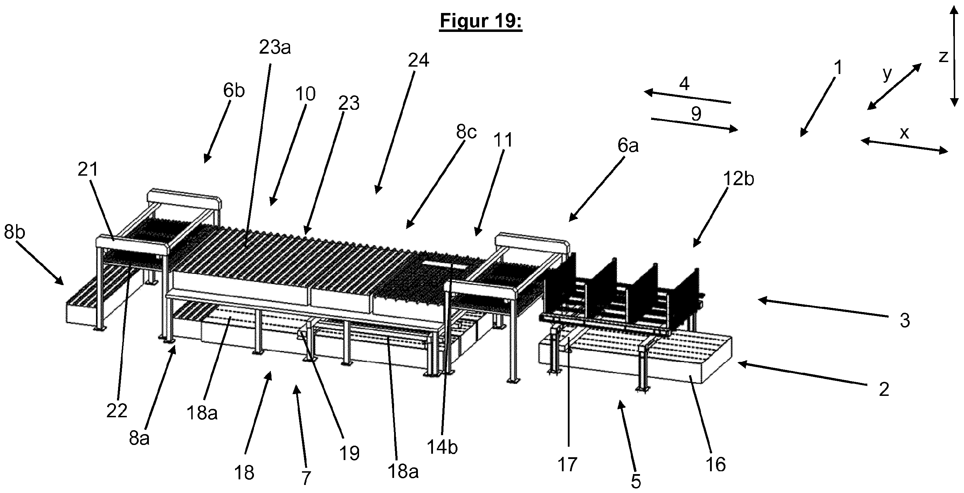

Dann wird der Verbundglastafelteil 14b mittels der Fördermittel des Hubtisches 22 und des Auflagetisches 23 der Schwenkeinrichtung 10 in seine Schwenkposition transportiert und dann die Auflageplatte 23a angehoben, , insbesondere um 90°, um die vertikale z-Achse bzw. Hochachse gedreht, und wieder abgesenkt. Der gedrehte Verbundglastafelteil 14b wird mittels der Fördermittel des Auflagetisches 23 der Schwenkeinrichtung 10 und der dritten Förderstrecke 8c in Rückführrichtung 9 auf die Quertransporteinrichtung 11 gefördert (Fig. 17, 18). Der Hubtisch 22 der ersten Hub- und Transporteinrichtung 6a wird zudem in seine obere Stellung verfahren (Fig. 19).

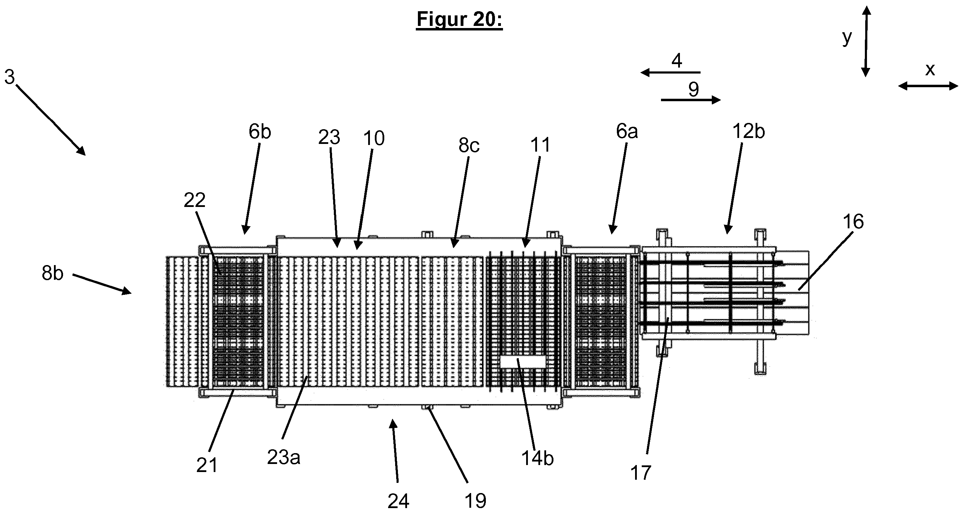

In der Quertransporteinrichtung 11 wird der Verbundglastafelteil 14b soweit in y-Richtung befördert, dass er später neben der Rest-Verbundglastafel 14a platziert werden kann (Fig. 20).

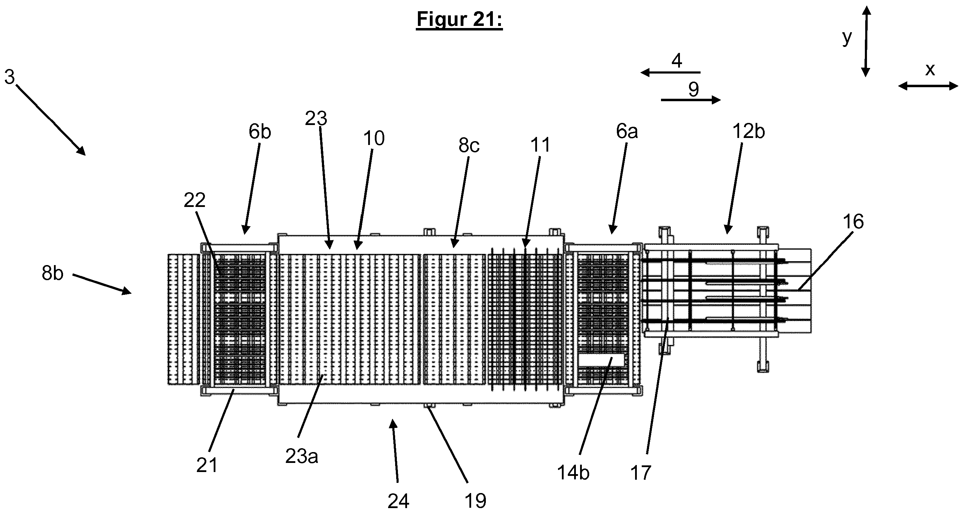

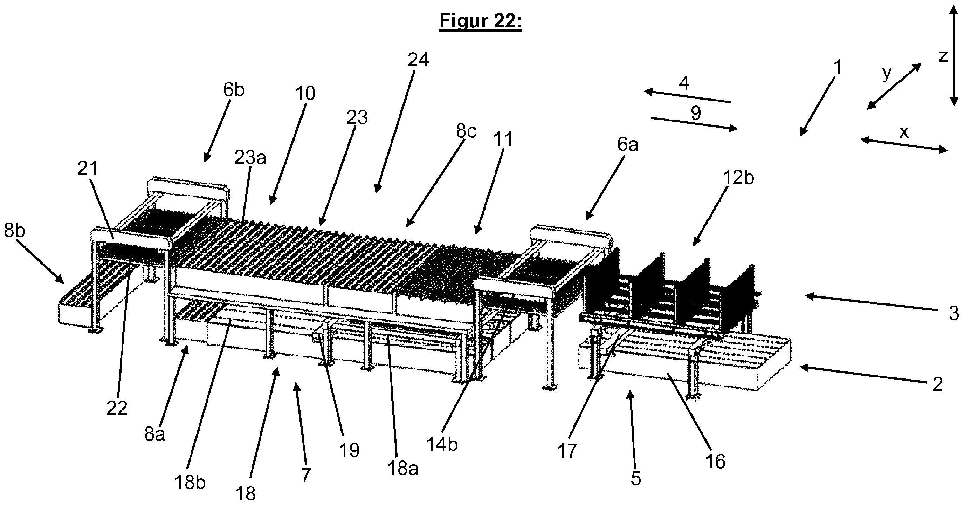

Dann wird der Verbundglastafelteil 14b auf die erste Tischplatte des sich in seiner oberen Stellung befindlichen Hubtisches 22 der ersten Hub- und Transporteinrichtung 6a gefördert (Fig. 21, 22).

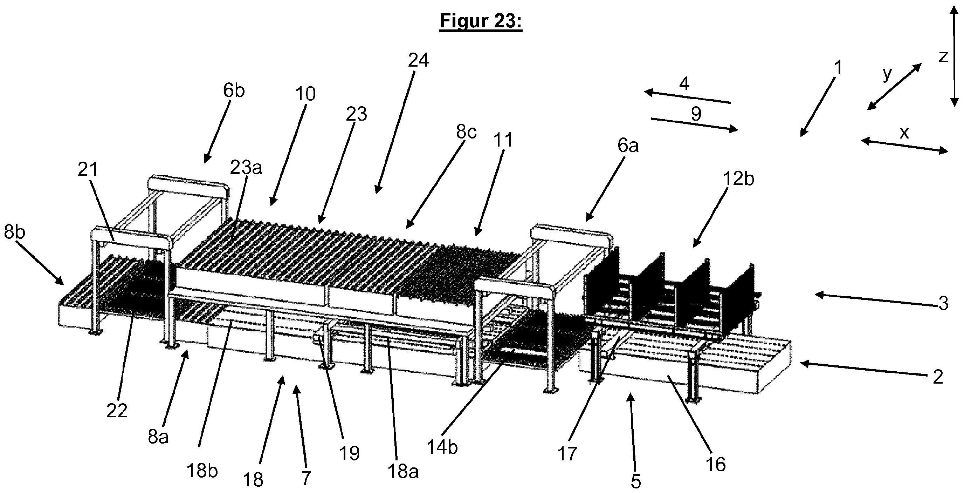

Anschließend wird der Hubtisch 22 der ersten Hub- und Transporteinrichtung 6a in seine untere Stellung verfahren (Fig. 23).

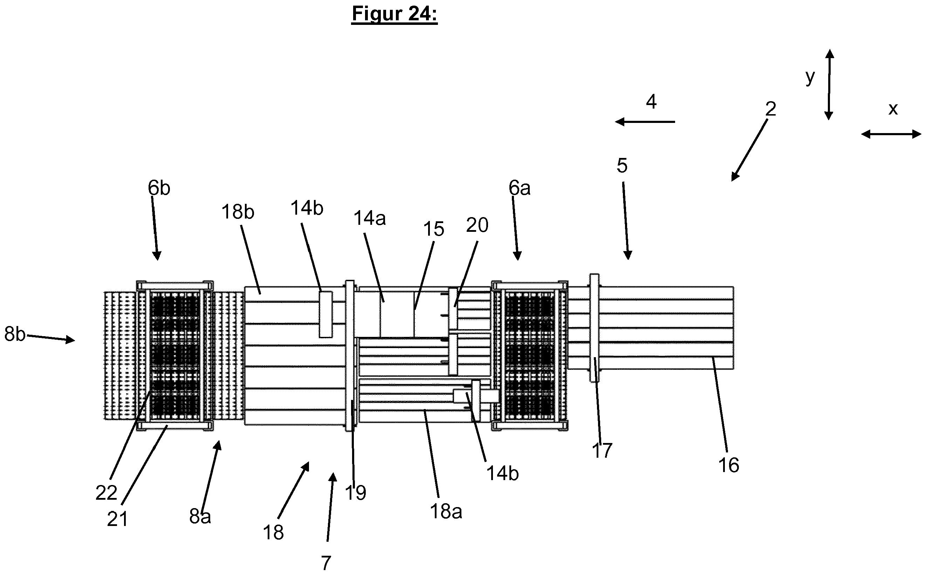

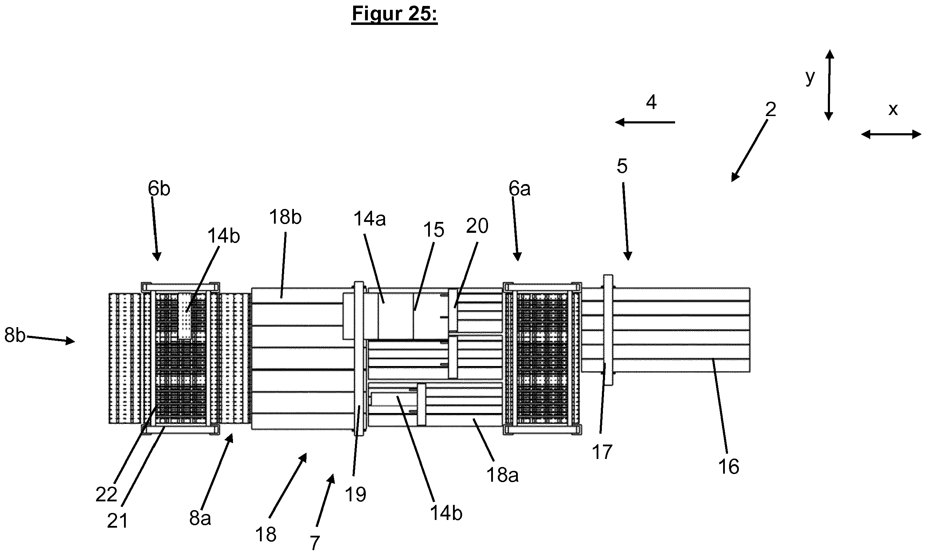

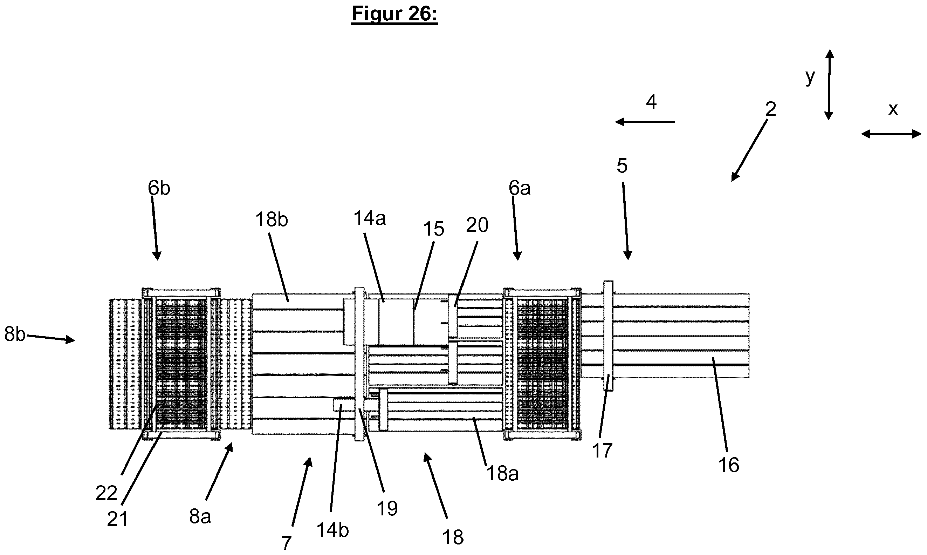

Nun wird der Verbundglastafelteil 14b von dem Hubtisch 22 in Hauptförderrichtung 4 wieder zu der Verbundglasschneideinrichtung 7 gefördert (Fig. 24, 25). Dabei wird der Verbundglastafelteil 14b neben der Rest-Verbundglastafel 14a positioniert und wird dann gleichzeitig mit dieser geschnitten (Fig. 26). Es werden wiederum vorzugsweise jeweils Trennlinien in y-Richtung erzeugt. Das heißt, der Verbundglastafelteil 14b und die Rest-Verbundglastafel 14a sind während des Schneidvorgangs stationär.

Aufgrund der unabhängig voneinander positionierbaren Positionierbrücken 20 und anderen Fördermittel können der Verbundglastafelteil 14b und die Rest-Verbundglastafel 14a unabhängig voneinander verfahren und auch zueinander versetzt angeordnet werden.

Der Verbundglastafelteil 14b wird in einen, in Hauptförderrichtung 4 gesehen vorgeordneten, abgetrennten Verbundglastafelteil 14c und einen in Hauptförderrichtung 4 gesehen nachgeordneten Rest-Verbundglastafelteil 14d geteilt. Einen derartigen Schnitt des Verbundglastafelteils 14b nennt man auf dem Fachgebiet auch "y-Schnitt". Bei der Rest-Verbundglastafel 14a wird ein weiterer "x-Schnitt" durchgeführt.

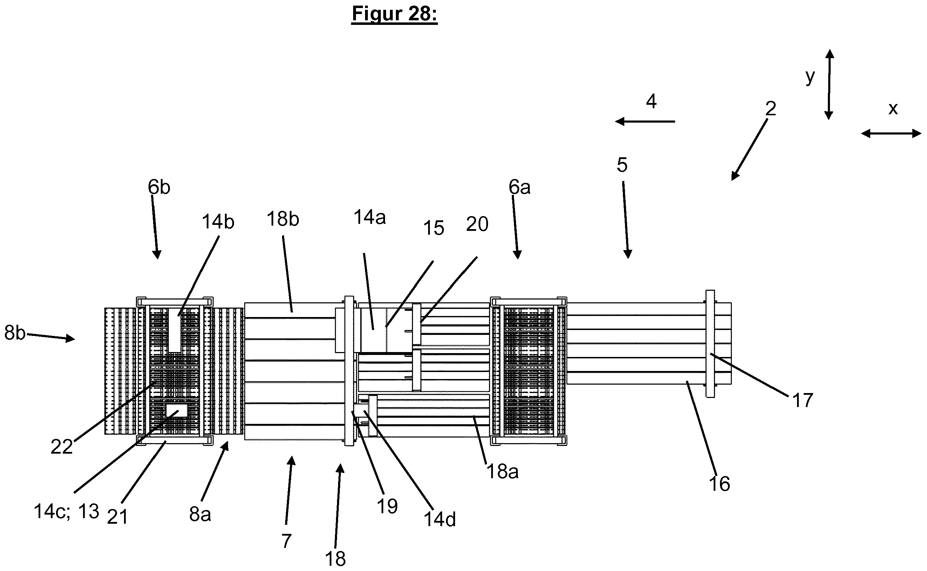

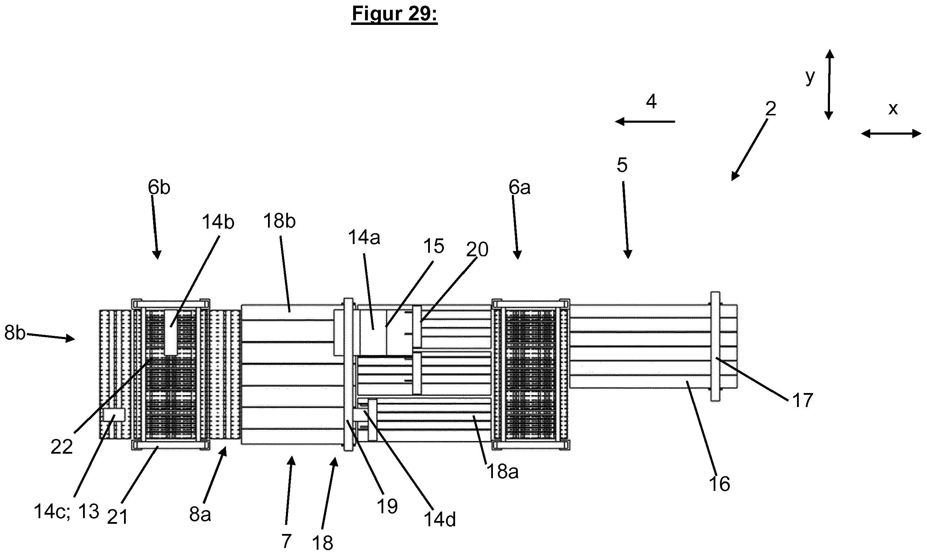

Hat der von dem Verbundglastafelteil 14b abgetrennte Verbundglastafelteil 14c bereits sein Endmaß erreicht, handelt es sich also um eine fertig geschnittene Verbundglasscheibe 13, wird dieser über den Hubtisch 22 der zweiten Hub- und Transporteinrichtung 6b hinweg auf die zweite Förderstrecke 8b gefördert und von dieser aus der Verbundglasschneidanlage 1 herausgeführt (Fig. 28, 29).

Der von der Rest-Verbundglastafel 14a abgetrennte Verbundglastafelteil 14b wird, insbesondere synchronisiert, mit der Verbundglasscheibe 13 auf den Hubtisch 22 der zweiten Hub- und Transporteinrichtung 6b gefördert und dann wie oben beschrieben der Schwenkeinrichtung 10 zugeführt, gedreht und zur Verbundglasschneideinrichtung 7 zum Schneiden zurückgeführt (Fig. 28, 29).

Zudem wird die Rest-Verbundglastafel 14a mittels zumindest einer Positionierbrücke 20 in Hauptförderrichtung 4 in die nächste Schneidposition gefördert (Fig. 28, 29).

Sollte der Rest-Verbundglastafelteil 14d bereits sein Endmaß erreicht haben, handelt es sich also ebenfalls um eine fertig geschnittene Verbundglasscheibe 13, wird dieser ebenfalls über den Hubtisch 22 der zweiten Hub- und Transporteinrichtung 6b hinweg auf die zweite Förderstrecke 8b gefördert und von dieser aus der Verbundglasschneidanlage 1 herausgeführt (Fig. 28, 29).

Sollten der von dem Verbundglastafelteil 14b abgetrennte Verbundglastafelteil 14c und/oder der Rest-Verbundglastafelteil 14d ihr Endmaß noch nicht erreicht haben, werden sie ebenfalls erneut der Schwenkeinrichtung 10 zugeführt und in dieser erneut gedreht und nach der Drehung der Verbundglasschneideinrichtung 7 zugeführt. Derartige Schnitte nennt man auf dem Fachgebiet "z-Schnitte". Die darauffolgenden Schnitte "w-Schnitte".

Zudem können die noch auf Endmaß zu schneidenden Verbundglastafelteile 14b-d auch in der Speichereinrichtung 12b zwischen gespeichert werden.

Im Rahmen der Erfindung liegt es dabei auch, durch eine Kombination bzw. Überlagerung einer Bewegung der Schneid- und Brechwerkzeuge in y-Richtung entlang der Schneidbrücke 19, einer Bewegung der zu schneidenden Verbundglastafel 14;14a bzw. Verbundglastafelteile 14b-d in x-Richtung, sowie gegebenenfalls Drehungen des Schneidwerkzeugs und des Brechwerkzeugs um die Höhenachse in an sich bekannter Weise beliebige Schneidkonturen erzeugt werden. Das heißt, es werden z.B. gerade Trennlinien 15 erzeugt, die schräg zur y-Richtung sind. Oder es können auch gekrümmte Trennlinien 15 erzeugt werden. Dies ist an sich bekannt und wird z.B. in der DE 101 57 833 beschrieben.

Welche Schneidkonturen dabei genau erzeugt werden bzw. welche Verbundglasscheiben 13 mit welchen Konturen und Abmessungen aus einer Verbundglastafel 14 herausgeschnitten werden, wird dabei automatisiert mittels eines Steuerprogramms einer Steuereinrichtung ermittelt. Die Steuereinrichtung wird mit den Informationen über die Anzahl und die Abmessungen der herzustellenden Verbundglasscheiben 13 versorgt und berechnet basierend darauf den Schneidplan. Der Schneidplan legt also nur fest, wie die benötigten Verbundglasscheiben 13 am besten aus den Verbundglastafeln 14 heraus geschnitten werden, unabhängig davon, wann die Verbundglasscheiben 13 benötigt werden, also zu welchem Fertigungsauftrag sie gehören. Die Schneidpläne werden also zunächst mittels eines auf dem Fachgebiet bekannten Programmes erstellt. Das Programm erstellt die Schneidpläne auf Basis der abzuarbeitenden Aufträge. Die Steuerung des Verfahrens erfolgt dann auf Basis der Schneidpläne.

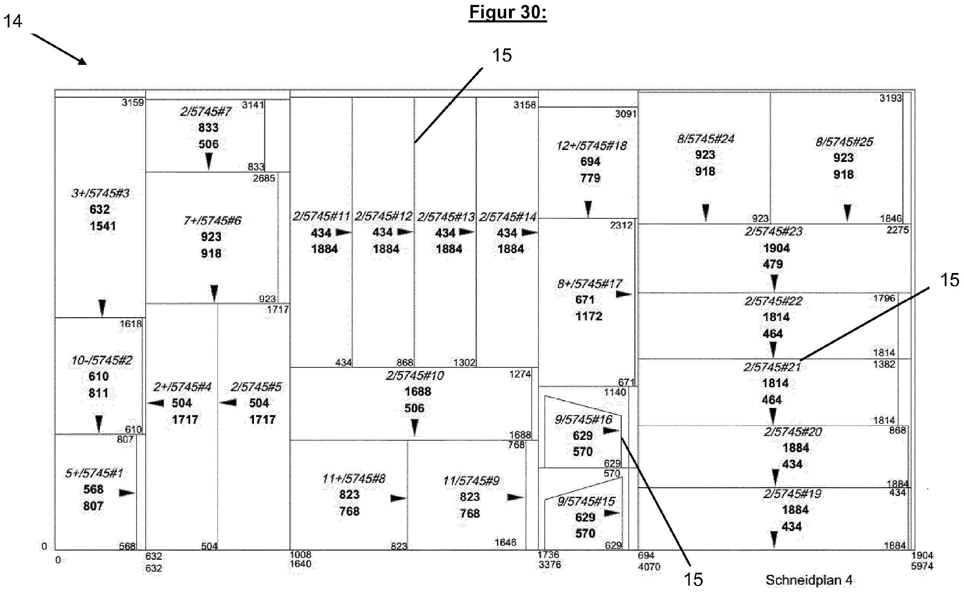

Figur 30 zeigt beispielhaft eine Verbundglastafel mit Schneidplan, in dem die Verbundglasscheiben 13 jeweils eine spezifische Kennzeichnung ("ID") aufweisen. Diese Markierungen werden entweder auf die einzelnen herauszutrennenden Abschnitte, z.B. bei der Randentschichtung, aufgebracht oder sie sind lediglich im Steuerprogramm abgespeichert.

Ein weiteres Programm der Steuereinrichtung ermittelt anschließend erfindungsgemäß auf Basis der Schneidpläne und der Aufträge den optimalen Ablauf des Schneidverfahrens, nämlich wann und wo welche Trennlinien 15 erzeugt werden und wie die (Rest-)Verbundglastafeln 14;14a und die Verbundglastafelteile 14c-d hierzu transportiert werden müssen, insbesondere wann welche Verbundglastafelteile 14b-d zurückgeführt werden und aus der Verbundglasschneidanlage 1 ausgefördert werden. Dieser Verfahrensablauf wird dann von der Verbundglasschneidanlage 1 vollkommen automatisiert gesteuert abgearbeitet. Es ist insbesondere nicht notwendig, dass die einzelnen (Rest-)Verbundglastafeln 14;14a und/oder Verbundglastafelteile 14b-d detektiert werden bzw. deren Lage in der Verbundglasschneidanlage 1 überwacht wird.

Zudem wird auch berechnet, wann eine Rest-Verbundglastafel 14a in die erste Speichereinrichtung 12a befördert werden muss, da sie erst später weiter verarbeitet werden soll, da zu dem Zeitpunkt keine weiteren Glasscheiben 13 aus dieser Glassorte benötigt werden. Auch wird ermittelt, wann ein Verbundglastafelteil 14c-d in die zweite Speichereinrichtung 12b befördert werden muss, da diese ebenfalls erst später weiter geschnitten werden sollen oder erst später zusammen mit anderen fertigen Glasscheiben 13 aus der Verbundglasschneidanlage 1 heraus befördert werden soll.

Im Rahmen der Erfindung liegt es dabei auch, dass die Rückführung nicht oberhalb der Verbundglasschneideinrichtung 7 erfolgt, sondern auf der gleichen Ebene, also daneben. In diesem Fall entfallen die Hub- und Transporteinrichtungen 6a;b und es sind stattdessen Förderstrecken vorhanden, mit denen die Verbundglastafelteile in Querrichtung y gefördert werden. Aus Platzgründen ist aber die beschriebene Rückführung oberhalb der Verbundglasschneideinrichtung 7 auf einer oberhalb der Verbundglasschneideinrichtung 7 angeordneten Rückführebene bevorzugt.

Zudem können selbstverständlich auch mehrere Verbundglastafelteile 14b;d gleichzeitig bzw. nebeneinander und/oder gleichzeitig bzw. neben der Rest-Verbundglastafel 14a geschnitten werden. Dies ist vorteilhaft und wird insbesondere durch die nebeneinander angeordneten Positionierbrücken 20 und die Aufteilung der Fördermittel in Segmente ermöglicht.

Auch können mehrere Verbundglastafelteile 14b;14c gleichzeitig rückgeführt werden. Bei Bedarf erfolgt ein Quertransport, z.B. auf dem Hubtisch 22, des jeweiligen Verbundglastafelteils 14b;14c, um die Verbundglastafelteile 14b;14c nebeneinander platzieren zu können. Auch können mehrere Verbundglastafelteile 14b;14c z.B. gleichzeitig von dem Hubtisch 22 angehoben werden und auch verschwenkt werden. Sie liegen dann z.B. nach dem Verschwenken in Rückführrichtung 9 hintereinander auf der Auflageplatte 23a, werden nacheinander auf die Quertransporteinrichtung 11 verfahren und auf dieser nebeneinander platziert. Dann werden sie gleichzeitig auf den Hubtisch 22 verfahren und abgesenkt und können dann z.B. gleichzeitig erneut geschnitten werden.

Vorteil der erfindungsgemäßen Verbundglasschneidanlage 1 ist, dass die herzustellenden Verbundglasscheiben 13 sehr effizient aus einer Verbundglastafel 14 heraus geteilt werden können, da das Schneiden der (Rest)-Verbundglastafel 14;14a und der Verbundglastafelteile 14b;c gleichzeitig bzw. in einem Schnitt erfolgt. Da die Verbundglasschneidanlage 1 nur eine einzige Verbundglasschneideinrichtung 7 aufweist, ist sie zudem sehr kostengünstig. Zudem sind die Taktzeiten und der Personalbedarf deutlich verringert. Denn die erfindungsgemäße Verbundglasschneidanlage ist bedienerlos. Sie lässt sich zudem problemlos in komplexe Automatisierungssysteme einbinden. Außerdem können mehrere Verbundglastafelteile 14b-d und/oder eine Verbundglastafel 14;14a gleichzeitig nebeneinander geschnitten werden.

Die Mengen an Verbundglastafeln nehmen zudem dramatisch zu. Der Anteil am Isolierglas steigt von 30% auf aktuell 70%. Mit der neuen Norm 18008 wird der Anteil noch einmal stark ansteigen. Gleichzeitig sind die Produktionshallen vom Platz absolut begrenzt, darum wurde die erfindungsgemäße "doppelstöckige Anlage" entwickelt.

## Patentansprüche

1. Verbundglasschneidanlage (1) zum Aufteilen von Verbundglastafeln (14), bevorzugt Verbundsicherheitsglastafeln, die zumindest zwei Glasplatten und eine dazwischen angeordnete Verbundglaszwischenfolie aufweisen, in Verbundglasscheiben (13), bevorzugt Verbundsicherheitsglasscheiben, aufweisend:
- eine Randentschichtungseinrichtung (5),
- eine Verbundglasschneideinrichtung (7) zum Abtrennen eines Verbundglastafelteils (14b; 14c) von der Verbundglastafel (14;14a) und/oder von einem abgetrennten Verbundglastafelteil (14b-d),
- eine Rückführeinrichtung (24) zum Rückführen eines abgetrennten Verbundglastafelteils (14b;14c) zur Verbundglasschneideinrichtung (7), wobei die Rückführeinrichtung (24) eine Schwenkeinrichtung (10) zum Verschwenken des abgetrennten Verbundglastafelteils (14b;14c) um eine vertikale Schwenkachse und eine Quertransporteinrichtung (11) zum Transport eines Verbundglastafelteils (14b;14c) in eine zu einer Hauptförderrichtung (4) senkrechte, horizontale Querrichtung (y) aufweist, wobei die Rückführeinrichtung (24) so angeordnet ist, dass die Rückführung in eine zu einer Hauptförderrichtung (4) entgegengesetzte Rückführrichtung (9) oberhalb oder neben der Verbundglasschneideinrichtung (7) erfolgt.

2. Verbundglasschneidanlage (1) nach Anspruch 1,
**dadurch gekennzeichnet, dass**
die Verbundglasschneideinrichtung (7) Schneidwerkzeuge zum ober- und unterseitigen Ritzen der Verbundglastafel (14;14a) und/oder eines Verbundglastafelteils (14b-d), Brechwerkzeuge zum Brechen der unteren und oberen Glasplatte der Verbundglastafel (14;14a) und/oder eines Verbundglastafelteils (14b-d) und ein Trennwerkzeug zum Trennen der Verbundglaszwischenfolie aufweist.

3. Verbundglasschneidanlage (1) nach Anspruch 2,
**dadurch gekennzeichnet, dass**
die Verbundglasschneideinrichtung (7) eine ortsfeste Doppelschneidbrücke (19) mit einer oberhalb des Auflagetisches (18) angeordneten ersten Schneidbrücke zum oberseitigen Ritzen der Verbundglastafel (14;14a) und/oder eines Verbundglastafelteils (14b-d) und einer unterhalb des Auflagetisches (18) angeordneten zweiten Schneidbrücke zum unterseitigen Ritzen der Verbundglastafel (14;14a) und/oder eines Verbundglastafelteils (14b-d) aufweist.

4. Verbundglasschneidanlage (1) nach Anspruch 2 oder 3,
**dadurch gekennzeichnet, dass**
a) das Schneidwerkzeug ein um eine zur Glastafelebene parallele, horizontale Drehachse angetrieben oder frei drehbares Schneidrädchen ist, wobei das Schneidrädchen vorzugsweise zudem um eine zur Glastafelebene senkrechte, vertikale Drehachse angetrieben oder frei drehbar ist,
und/oder
b) das Brechwerkzeug ein um eine zur Glastafelebene parallele, horizontale Drehachse angetrieben oder frei drehbare Brechrolle ist, wobei die Brechrolle vorzugsweise zudem um eine zur Glastafelebene senkrechte, vertikale Drehachse angetrieben oder frei drehbar ist.

5. Verbundglasschneidanlage (1) nach einem der vorhergehenden Ansprüche,
**dadurch gekennzeichnet, dass**
die Verbundglasschneidanlage (1) eine Speichereinrichtung (12b) zur Zwischenspeicherung von bereits zumindest einmal geschnittenen Rest-Verbundglastafeln (14a) und/oder eine Speichereinrichtung (12b) zur Zwischenspeicherung von Verbundglastafelteilen (14b-d) aufweist.

6. Verbundglasschneidanlage (1) nach einem der vorhergehenden Ansprüche,
**dadurch gekennzeichnet, dass**
die Quertransporteinrichtung (11) in eine Rückführrichtung (9) gesehen der Schwenkeinrichtung (10) nachgeordnet ist.

7. Verbundglasschneidanlage (1) nach einem der vorhergehenden Ansprüche,
**dadurch gekennzeichnet, dass**
die Verbundglasschneidanlage (1) eine Steuereinrichtung zum Ermitteln von Schneidplänen für die Verbundglastafeln (14) auf Basis der Fertigungsaufträge und zum Ermitteln eines Verfahrensablaufplans des durchzuführenden Verbundglasschneidverfahrens unter anderem auf Basis der Schneidpläne und der vorhandenen Fertigungsaufträge und zum Steuern des Verfahrensablaufs, vorzugsweise zum Steuern der Einrichtungen (5;6a;6b;7;8a-c;10;11;12) der Verbundglasschneidanlage (1) nach dem Verfahrensablaufplan aufweist.

8. Verbundglasschneidanlage (1) nach einem der vorhergehenden Ansprüche,
**dadurch gekennzeichnet, dass**
die Rückführeinrichtung (24) eine der Verbundglasschneideinrichtung (7) in eine Hauptförderrichtung (4) nachgeordnete Hub-und Transporteinrichtung (6b) zum Anheben eines Verbundglastafelteils (14b;14c) auf eine Rückführebene und eine der Verbundglasschneideinrichtung (7) in Hauptförderrichtung (4) vorgeordnete Hub-und Transporteinrichtung (6a) zum Absenken des verschwenkten Verbundglastafelteils (14b;14c) auf die Ebene der Verbundglasschneideinrichtung (7) aufweist.

9. Verbundglasschneidanlage (1) nach einem der vorhergehenden Ansprüche,
**dadurch gekennzeichnet, dass**
die Verbundglasschneidanlage (1), vorzugsweise die Verbundglasschneideinrichtung (7) und/oder Rückführeinrichtung (24), bevorzugt die Schwenkeinrichtung (10), und/oder der Hubtisch (22), Fördermittel zum Transport der Verbundglastafel (14;14a) und/oder eines Verbundglastafelteils (14b-d) in eine horizontale, zur Querrichtung (y) senkrechte Längsrichtung (x) aufweist, wobei die Fördermittel vorzugsweise in in Querrichtung (y) zueinander benachbarte Segmente aufgeteilt sind, wobei die Segmente unabhängig voneinander ansteuerbar sind, so dass die Verbundglastafel (14;14a) und zumindest ein daneben angeordnetes Verbundglastafelteil (14b-d) unabhängig voneinander oder synchron miteinander transportiert werden können,
wobei vorzugsweise die Verbundglasschneideinrichtung (7) mehrere in Querrichtung (y) zueinander benachbarte Positionierbrücken als Fördermittel aufweist, die sowohl unabhängig voneinander verfahrbar als auch synchron miteinander verfahrbar sind.

10. Verbundglasschneidverfahren (1) zum Aufteilen von Verbundglastafeln (14), bevorzugt Verbundsicherheitsglastafeln, die zumindest zwei Glasplatten und eine dazwischen angeordnete Verbundglaszwischenfolie aufweisen, in Verbundglasscheiben (13), bevorzugt Verbundsicherheitsglasscheiben, vorzugsweise unter Verwendung einer Vorrichtung gemäß einem der vorhergehenden Ansprüche, mit den folgenden Verfahrensschritten:
- Randentschichten der Verbundglastafel (14),
- Abtrennen eines Verbundglastafelteils (14b) von der Verbundglastafel (14) in einer Verbundglasschneideinrichtung (7),
- Rückführen des abgetrennten Verbundglastafelteils (14b) zur Verbundglasschneideinrichtung (7), wobei der abgetrennte Verbundglastafelteil (14b) während des Rückführens um eine vertikale Schwenkachse verschwenkt wird,
- Abtrennen eines weiteren Verbundglastafelteils (14c) von dem rückgeführten Verbundglastafelteil (14b) in der Verbundglasschneideinrichtung (7),
wobei
- das Rückführen der Verbundglastafelteile (14b;14c) in eine zur Hauptförderrichtung (4) entgegengesetzte Rückführrichtung (9) und das Verschwenken jeweils oberhalb oder neben der Verbundglasschneideinrichtung (7) erfolgen, und
- ein Verbundglastafelteil (14b-d) gleichzeitig mit einer Verbundglastafel (14;14a) und/oder gleichzeitig mit einem weiteren Verbundglastafelteil (14b-d) geschnitten, gebrochen und getrennt wird.

11. Verbundglasschneidverfahren (1) nach Anspruch 10,
**dadurch gekennzeichnet, dass**
die abgetrennten Verbundglastafelteile (14b;14c) so oft in die Verbundglasschneideinrichtung (7) zurückgeführt und in dieser weiter zerteilt werden, bis sie ihr Endmaß erreicht haben.

12. Verbundglasschneidverfahren (1) nach Anspruch 10 oder 11,
**dadurch gekennzeichnet, dass**
die abgetrennten Verbundglastafelteile (14b; 14c) zumindest teilweise vor der Rückführung in einer Speichereinrichtung (12b) zwischengespeichert werden.

13. Verbundglasschneidverfahren (1) nach einem der Ansprüche 10 bis 12,
**dadurch gekennzeichnet, dass**
die Rest-Verbundglastafeln (14a) zumindest teilweise zwischen zwei Schneidvorgängen in einer Speichereinrichtung (12a) zwischengespeichert werden.

14. Verbundglasschneidverfahren (1) nach einem der Ansprüche 10 bis 13,
**dadurch gekennzeichnet, dass**
die abgetrennten Verbundglastafelteile (14b;14c) vor oder nach dem Verschwenken in eine zur Hauptförderrichtung (4) senkrechte, horizontale Querrichtung (y) gefördert werden.

15. Verbundglasschneidverfahren (1) nach einem der Ansprüche 10 bis 14, **dadurch gekennzeichnet, dass**
a) das Verbundglasschneidverfahren automatisiert gesteuert erfolgt, und/oder
b) mittels einer Steuereinrichtung automatisiert auf Basis der Fertigungsaufträge zunächst Schneidpläne für die Verbundglastafeln (14) erstellt werden und anschließend unter anderem auf Basis der Schneidpläne und der Fertigungsaufträge ein Verfahrensablaufplan für das Verbundglasschneidverfahren erstellt wird das Verbundglasschneidverfahren nach dem Verfahrensablaufplan gesteuert wird.

## Claims

1. A laminated glass cutting apparatus (1) for dividing laminated glass sheets (14), preferably laminated safety glass sheets, comprising at least two glass plates and an intermediate laminated glass film disposed therebetween, into laminated glass panes (13), preferably laminated safety glass panes, comprising:
- an edge decoating device (5),
- a laminated glass cutting device (7) for separating a laminated glass sheet part (14b;14c) from the laminated glass sheet(14;14a) and/or from a separated laminated glass sheet part (14b-d),
- a returning device (24) for returning a separated laminated glass sheet part (14b;14c) to the laminated glass cutting device (7), the returning device (24) comprising a pivot device (10) for pivoting the separated laminated glass sheet part (14b;14c) about a vertical pivot axis and a transverse transport device (11) for transporting a laminated glass sheet part (14b;14c) in a horizontal transverse direction (y) perpendicular to a main conveying direction (4), wherein the returning device (24) is arranged such that the returning in a return direction (9) opposite to a main conveying direction (4) takes place above or next to the laminated glass cutting device (7).

2. Laminated glass cutting apparatus (1) according to claim 1,
**characterized in that**
the laminated glass cutting device (7) comprises cutting tools for scoring the upper and lower sides of the laminated glass sheet (14;14a) and/or of a laminated glass sheet part (14b-d), breaking tools for breaking the lower and upper glass plates of the laminated glass sheet (14;14a) and/or of a laminated glass sheet part (14b-d), and a separating tool for separating the intermediate laminated glass film.

3. Laminated glass cutting apparatus (1) according to claim 2,
**characterized in that**
the laminated glass cutting device (7) comprises a stationary double cutting bridge (19) with a first cutting bridge arranged above the support table (18) for scoring the laminated glass sheet (14;14a) and/or a laminated glass sheet part (14b-d) on the upper side and a second cutting bridge arranged below the support table (18) for scoring the laminated glass sheet (14;14a) and/or a laminated glass sheet part (14b-d) on the lower side.

4. Laminated glass cutting apparatus (1) according to claim 2 or 3,
**characterized in that**
a) the cutting tool is a cutting wheel driven or freely rotatable about a horizontal rotational axis, which is parallel to the glass sheet plane, the cutting wheel preferably also being driven or freely rotatable about a vertical rotational axis, which is perpendicular to the glass sheet plane,
and/or
b) the breaking tool is a breaking roller driven or freely rotatable about a horizontal rotational axis, which is parallel to the glass sheet plane, the breaking roller preferably also being driven or freely rotatable about a vertical rotational axis, which is perpendicular to the glass sheet plane.

5. Laminated glass cutting apparatus (1) according to one of the preceding claims,
**characterized in that**
the laminated glass cutting apparatus (1) comprises a storage device (12b) for the intermediate storage of residual laminated glass sheets (14a) which have already been cut at least once and/or a storage device (12b) for the intermediate storage of laminated glass sheet parts (14b-d).

6. Laminated glass cutting apparatus (1) according to one of the preceding claims,
**characterized in that**
the transverse transport device (11) is arranged downstream of the pivot device (10) as viewed in a return direction (9).

7. Laminated glass cutting apparatus (1) according to one of the preceding claims,
**characterized in that**
the laminated glass cutting apparatus (1) has a control device for determining cutting plans for the laminated glass sheets (14) on the basis of the production orders and for determining a process workflow plan of the laminated glass cutting process to be carried out, inter alia on the basis of the cutting plans and the existing production orders, and for controlling the process workflow, preferably for controlling the devices (5;6a;6b;7;8a-c;10;11;12) of the laminated glass cutting apparatus (1) according to the process workflow plan.

8. Laminated glass cutting apparatus (1) according to one of the preceding claims,
**characterized in that**
the returning device (24) comprises a lifting and transporting device (6b), arranged downstream of the laminated glass cutting device (7) in a main conveying direction (4), for lifting a laminated glass sheet part (14b;14c) onto a return plane and a lifting and transporting device (6a), arranged upstream of the laminated glass cutting device (7) in the main conveying direction (4), for lowering the pivoted laminated glass sheet part (14b;14c) onto the plane of the laminated glass cutting device (7).

9. Laminated glass cutting apparatus (1) according to one of the preceding claims,
**characterized in that**
the laminated glass cutting apparatus (1), preferably the laminated glass cutting device (7) and/or the returning device (24), preferably the pivot device (10), and/or the lifting table (22), comprises conveying means for transporting the laminated glass sheet (14;14a) and/or a laminated glass sheet part (14b-d) in a horizontal longitudinal direction (x) perpendicular to the transverse direction (y), the conveying means preferably being divided into segments adjacent to one another in the transverse direction (y), the segments being controllable independently of one another, so that the laminated glass sheet (14;14a) and at least one adjacently arranged laminated glass sheet part (14b-d) can be transported independently of one another or synchronously with one another,
wherein preferably the laminated glass cutting device (7) comprises several positioning bridges as conveying means, which are adjacent to each other in the transverse direction (y) and which can be moved independently of each other as well as synchronously with each other.

10. A laminated glass cutting method (1) for dividing laminated glass sheets (14), preferably laminated safety glass sheets, comprising at least two glass plates and an intermediate laminated glass film arranged therebetween, into laminated glass panes (13), preferably laminated safety glass panes, preferably by using an apparatus according to one of the preceding claims, comprising the following method steps:
- Edge decoating of the laminated glass sheet (14),
- Separating a laminated glass sheet part (14b) from the laminated glass sheet (14) in a laminated glass cutting device (7),
- Returning the separated laminated glass sheet part (14b) to the laminated glass cutting device (7), wherein the separated laminated glass sheet part (14b) is pivoted about a vertical pivot axis during the return,
- Separating a further laminated glass sheet part (14c) from the returned laminated glass sheet part (14b) in the laminated glass cutting device (7),
wherein
- the returning of the laminated glass sheet parts (14b;14c) in a return direction (9) opposite to the main conveying direction (4) and the pivoting each take place above or next to the laminated glass cutting device (7), and
- a laminated glass sheet part (14b-d) is cut, broken and separated simultaneously with a laminated glass sheet (14;14a) and/or simultaneously with another laminated glass sheet part (14b-d).

11. Laminated glass cutting method (1) according to claim 10,
**characterized in that**
the separated laminated glass sheet parts (14b;14c) are returned to the laminated glass cutting device (7) and further cut therein until they have reached their final size.

12. Laminated glass cutting method (1) according to claim 10 or 11,
**characterized in that**
the separated laminated glass sheet parts (14b;14c) are at least partially temporarily stored in a storage device (12b) before being returned.

13. Laminated glass cutting method (1) according to one of claims 10 to 12,
**characterized in that**
the residual laminated glass sheets (14a) are at least partially intermediately stored in a storage device (12a) between two cutting operations.

14. Laminated glass cutting method (1) according to one of claims 10 to 13,
**characterized in that**
the separated laminated glass sheet parts (14b;14c) are conveyed before or after pivoting in a horizontal transverse direction (y) perpendicular to the main conveying direction (4).

15. Laminated glass cutting method (1) according to one of claims 10 to 14,
**characterized in that**
a) the laminated glass cutting method is carried out automatically controlled,
and/or
b) cutting plans for the laminated glass sheets (14) are initially generated automatically by means of a control device on the basis of the production orders, and subsequently, inter alia on the basis of the cutting plans and the production orders, a process workflow plan for the laminated glass cutting method is generated, and the laminated glass cutting method is controlled according to the process workflow plan.

## Revendications

1. Installation (1) de coupe de verre feuilleté pour diviser des panneaux (14) de verre feuilleté, de préférence des panneaux de verre feuilleté de sécurité, qui présentent au moins deux plaques de verre et une feuille intermédiaire de verre feuilleté disposée entre celles-ci, en des plaques (13) de verre feuilleté, de préférence des plaques de verre feuilleté de sécurité, présentant :
- un dispositif (5) de décapage des bords,
- un dispositif (7) de coupe de verre feuilleté pour séparer une partie (14b ; 14c) de panneau de verre feuilleté d'avec le panneau (14 ; 14a) de verre feuilleté et/ou d'avec une partie séparée (14b-d) de panneau de verre feuilleté,
- un dispositif (24) de déplacement en retour, pour déplacer en retour une partie séparée (14b ; 14c) de panneau de verre feuilleté vers le dispositif (7) de coupe de verre feuilleté, le dispositif (24) de déplacement en retour comprenant un dispositif de pivotement (10) pour faire pivoter la partie séparée (14b ; 14c) de panneau de verre feuilleté autour d'un axe de pivotement vertical et un dispositif (11) de transport transversal pour transporter une partie (14b ; 14c) de panneau de verre feuilleté dans une direction transversale horizontale (y) perpendiculaire à une direction de transport principale (4), le dispositif (24) de déplacement en retour étant agencé de telle sorte que le déplacement en retour dans une direction de retour (9) opposée à une direction de transport principale (4) s'effectue au-dessus ou à côté du dispositif (7) de coupe de verre feuilleté.

2. Installation (1) de coupe de verre feuilleté selon la revendication 1,
**caractérisée en ce que**
le dispositif (7) de coupe de verre feuilleté présente des outils de coupe pour rainurer les côtés supérieur et inférieur du panneau (14 ; 14a) de verre feuilleté et/ou d'une partie (14b-d) de panneau de verre feuilleté, des outils de rupture pour rompre la plaque de verre inférieure et supérieure du panneau (14 ; 14a) de verre feuilleté et/ou d'une partie (14b-d) de panneau de verre feuilleté, et un outil de séparation pour séparer le film intermédiaire de verre feuilleté.

3. Installation (1) de coupe de verre feuilleté selon la revendication 2,
**caractérisée en ce que**
le dispositif (7) de coupe de verre feuilleté présente un double pont de coupe (19) fixe ayant un premier pont de coupe agencé au-dessus de la table de support (18) pour rainurer le côté supérieur du panneau (14 ; 14a) de verre feuilleté et/ou d'une partie (14b-d) de panneau de verre feuilleté, et un deuxième pont de coupe agencé au-dessous de la table de support (18) pour rainurer le côté inférieur du panneau (14 ; 14a) de verre feuilleté et/ou d'une partie (14b-d) de panneau de verre feuilleté.

4. Installation (1) de coupe de verre feuilleté selon la revendication 2 ou la revendication 3,
**caractérisée en ce que**
a) l'outil de coupe est une molette de coupe entraînée ou libre en rotation autour d'un axe de rotation horizontal parallèle au plan du panneau de verre, la molette de coupe étant de préférence également entraînée ou libre en rotation autour d'un axe de rotation vertical perpendiculaire au plan du panneau de verre,
et/ou
b) l'outil de rupture est un rouleau de rupture entraîné ou libre en rotation autour d'un axe de rotation horizontal parallèle au plan du panneau de verre, le rouleau de rupture étant de préférence également entraîné ou libre en rotation autour d'un axe de rotation vertical perpendiculaire au plan du panneau de verre.

5. Installation (1) de coupe de verre feuilleté selon l'une des revendications précédentes,
**caractérisée en ce que**
l'installation (1) de coupe de verre feuilleté présente un dispositif de stockage (12b) pour le stockage intermédiaire de panneaux (14a) de verre feuilleté restants déjà coupés au moins une fois et/ou un dispositif de stockage (12b) pour le stockage intermédiaire de parties (14b-d) de panneaux de verre feuilleté.

6. Installation (1) de coupe de verre feuilleté selon l'une des revendications précédentes,
**caractérisée en ce que**
le dispositif (11) de transport transversal est placé en aval du dispositif de pivotement (10), vu dans une direction de retour (9).

7. Installation (1) de coupe de verre feuilleté selon l'une des revendications précédentes,
**caractérisée en ce que**
l'installation (1) de coupe de verre feuilleté présente un dispositif de commande pour déterminer des plans de coupe pour les panneaux (14) de verre feuilleté sur la base des ordres de fabrication et pour déterminer un plan de déroulement du procédé de coupe de verre feuilleté à exécuter, entre autres sur la base des plans de coupe et des ordres de fabrication existants et pour commander le déroulement du procédé, de préférence pour commander les dispositifs (5 ; 6a ; 6b ; 7 ; 8a-c ; 10 - 11 - 12) de l'installation (1) de coupe de verre feuilleté conformément au plan de déroulement du procédé.

8. Installation (1) de coupe de verre feuilleté selon l'une des revendications précédentes,
**caractérisée en ce que**
le dispositif (24) de déplacement en retour présente un dispositif (6b) de levage et de transport agencé en aval du dispositif (7) de coupe de verre feuilleté dans une direction principale de transport (4) pour soulever une partie (14b ; 14c) de panneau de verre feuilleté sur un plan de retour, et un dispositif de levage et de transport (6a) agencé en amont du dispositif (7) de coupe de verre feuilleté dans la direction principale de transport (4) pour abaisser la partie (14b ; 14c) de panneau de verre feuilleté pivotée sur le plan du dispositif (7) de coupe de verre feuilleté.

9. Installation (1) de coupe de verre feuilleté selon l'une des revendications précédentes,
**caractérisée en ce que**
l'installation (1) de coupe de verre feuilleté, de préférence le dispositif (7) de coupe de verre feuilleté et/ou le dispositif (24) de déplacement en retour, de préférence le dispositif de pivotement (10), et/ou la table élévatrice (22), présente des moyens de transport pour transporter le panneau (14 ; 14a) de verre feuilleté et/ou une partie (14b-d) de panneau de verre feuilleté dans une direction longitudinale (x) horizontale, perpendiculaire à la direction transversale (y), les moyens de transport étant de préférence divisés en segments voisins les uns des autres dans la direction transversale (y), les segments étant aptes à être commandés indépendamment les uns des autres, de sorte que le panneau (14 ; 14a) de verre feuilleté et au moins une partie (14b-d) de panneau de verre feuilleté disposée à côté sont aptes à être transportés indépendamment l'un de l'autre ou de manière synchrone l'un avec l'autre,
le dispositif (7) de coupe de verre feuilleté présentant de préférence plusieurs ponts de positionnement voisins les uns des autres dans la direction transversale (y) en tant que moyens de transport, qui sont aptes à être déplacés aussi bien indépendamment les uns des autres que de manière synchrone les uns avec les autres.

10. Procédé (1) de coupe de verre feuilleté pour diviser des panneaux (14) de verre feuilleté, de préférence des panneaux de verre feuilleté de sécurité, qui présentent au moins deux plaques de verre et une feuille intermédiaire de verre feuilleté disposée entre celles-ci, en des plaques (13) de verre feuilleté, de préférence des plaques de verre feuilleté de sécurité, de préférence en utilisant un dispositif selon l'une des revendications précédentes, ayant les étapes de procédé suivantes :
- coupe du bord du panneau (14) de verre feuilleté,
- séparation d'une partie (14b) du panneau de verre feuilleté d'avec le panneau (14) de verre feuilleté dans un dispositif (7) de coupe de verre feuilleté,
- déplacer en retour la partie séparée (14b) de panneau de verre feuilleté vers le dispositif (7) de coupe de verre feuilleté, la partie séparée (14b) de panneau de verre feuilleté étant pivotée autour d'un axe de pivotement vertical pendant le déplacement en retour,
- séparation d'une autre partie (14c) de panneau de verre feuilleté d'avec la partie (14b) de panneau de verre feuilleté déplacée en retour dans le dispositif (7) de coupe de verre feuilleté,
dans lequel
- le déplacement en retour des parties (14b ; 14c) de panneau de verre feuilleté dans une direction de retour (9) opposée à la direction de transport principale (4) et le pivotement s'effectue respectivement au-dessus ou à côté du dispositif (7) de coupe de verre feuilleté, et
- une partie (14b-d) de panneau de verre feuilleté est coupée, rompue et séparée simultanément avec un panneau (14 ; 14a) de verre feuilleté et/ou simultanément avec une autre partie (14b-d) de panneau de verre feuilleté.

11. Procédé (1) de découpe de verre feuilleté selon la revendication 10,
**caractérisé en ce que**
les parties séparées (14b ; 14c) de panneau de verre feuilleté sont déplacées en retour dans le dispositif (7) de coupe de verre feuilleté et sont divisées dans celui-ci de façon supplémentaire jusqu'à ce qu'elles aient atteint leur dimension finale.

12. Procédé (1) de découpe de verre feuilleté selon la revendication 10 ou la revendication 11,
**caractérisé en ce que**
les parties séparées (14b ; 14c) de panneau de verre feuilleté sont stockées temporairement, au moins en partie, dans un dispositif de stockage (12b) avant le déplacement en retour.

13. Procédé (1) de découpe de verre feuilleté selon l'une des revendications 10 à 12,
**caractérisé en ce que**
les panneaux restants (14a) de verre feuilleté sont stockés au moins partiellement dans un dispositif de stockage (12a) entre deux opérations de coupe.

14. Procédé (1) de découpe de verre feuilleté selon l'une des revendications 10 à 13,
**caractérisé en ce que**
les parties séparées (14b ; 14c) de panneau de verre feuilleté sont transportées avant ou après le pivotement dans une direction transversale horizontale (y) perpendiculaire à la direction de transport principale (4).

15. Procédé (1) de découpe de verre feuilleté selon l'une des revendications 10 à 14,
**caractérisé en ce que**
a) le procédé de découpe de verre feuilleté est commandé de manière automatisée,
et/ou
b) des plans de coupe pour les panneaux (14) de verre feuilleté sont d'abord établis de manière automatisée au moyen d'un dispositif de commande sur la base des ordres de fabrication, puis un plan de déroulement du procédé pour le procédé de coupe de verre feuilleté est établi entre autres sur la base des plans de coupe et des ordres de fabrication, et le procédé de coupe de verre feuilleté est commandé conformément au plan de déroulement du procédé.
